# EUROPEAN PATENT SPECIFICATION

(11) **EP 3 019 895 B1**
(45) Date of publication and mention of the grant of the patent: **04.11.2020**
(21) Application number: 14742309.9
(22) Date of filing: 14.07.2014
(51) Int. Cl.: G01V 1/42, E21B 43/26, E21B 47/00, E21B 47/12, E21B 47/10

(54) **MONITORING OF HYDRAULIC FRACTURING OPERATIONS**
ÜBERWACHUNG VON HYDRAULISCHEN AUFBRECHOPERATIONEN
SURVEILLANCE DES OPÉRATIONS DE FRACTURATION HYDRAULIQUE

(30) Priority: 12.07.2013 GB 201312549
(43) Date of publication of application: 18.05.2016
(73) Proprietor: Fotech Group Limited, Church Crookham Fleet Hampshire GU52 0RD (GB)
(72) Inventor: HAYWARD, Peter John, Church Crookham Fleet Hampshire GU52 0RJ (GB)
(74) Representative: Boult Wade Tennant LLP
(86) International application number: PCT/GB2014/052145
(87) International publication number: WO 2015/004487

(56) References cited:
- EP-A2- 2 418 466
- WO-A2-2012/072981
- WO-A2-2012/087604
- GB-A- 2 491 658
- US-A1- 2007 283 761
- US-A1- 2012 111 560
- US-A1- 2013 092 371
- US-B2- 7 104 331
- MOLENAAR M M ET AL: "First Downhole Application of Distributed Acoustic Sensing (DAS) for Hydraulic Fracturing Monitoring and Diagnostics", SPE HYDRAULIC FRACTURING TECHNOLOGY CONFERENCE AND EXHIBITION, SPE, US, no. SPE 140561, 24 January 2011 (2011-01-24), pages 1-9, XP007921531,

## Description

The present invention relates to methods and apparatus for monitoring hydraulic fracturing operations in wells, for example to methods and apparatus utilised to provide real-time monitoring of the hydraulic fracturing process that is performed during the completion of certain classes of oil and gas production wells.

### Introduction

Hydraulic fracturing is a process utilised in the oil and gas industry, developed to aid extraction of hydrocarbons (the product) from an associated reservoir. The reservoir is typically encapsulated in a hard shale rock formation. The permeability of such formations is typically very low and the fracturing of this hard shale rock improves the permeability to the extent that the product can more readily flow from the reservoir to the wellbore.

The fracturing process is only undertaken in cased wellbores. That is, once the wellbore has been drilled, a metal casing is inserted along the length of the wellbore, to mitigate aquifer ingress and to aid product extraction. The resulting void (annulus) between the outer wall of the casing and wall of the wellbore is thereafter backfilled with cement to retain and seal the casing in its final position. In wellbores drilled in hard shale rock the casing will typically extend the full length of the wellbore, that is, from top to toe. Moreover, the well is generally, but not necessarily, of a highly deviated type such as a horizontal well. To achieve this, the drilling operation extends vertically into the ground for a certain distance before turning at approximately 90 degrees to the vertical axis and continuing to extend out further on the horizontal plane, following the reservoir.

It is becoming common practice to implement fracturing on a large number of these hard shale rock wells. The fracturing process itself is undertaken at a number of discrete locations within the defined production zone of the well, which will typically (but not necessarily) extend for the final half to two-thirds of the well's length, depending on wellbore and reservoir geometry. Moreover, each discrete fracture location will itself typically have a number of smaller discrete fracture points, each fracture point possibly having a number of radially distributed fracture fluid egress points. A fracture point having a number of radially distributed fracture fluid egress points is generally known as a fracture cluster, and a discrete fracture location within the wellbore is generally known as a fracture zone. That is, fracturing of a hydrocarbon production well will consist of a number of localised, multi-cluster, fracture zones.

The process is typically completed with one of two modes of operation, either with a perforation-and-plugging type operation or with a 'sliding-sleeve' approach. The former is a two-stage operation, whereby the wellbore casing is first perforated before the fracturing process itself is undertaken. That is, perforation points are first created in the casing through which fracture fluid is then pumped into the surrounding formation at high pressure. The perforations are created in the casing by means of shaped-charges (directional explosives), which are positioned at the required location in the wellbore before being detonated. Detonation of the charge is sufficient not only to perforate the casing but also to penetrate through the localised casing cement and extend a short distance into the local formation. Typically all clusters within one fracture zone are perforated in one operation. With the perforation process complete fracturing of the zone will be implemented. When the fracturing process for a given zone is complete the whole process will be repeated at the next fracture zone location. The first zone to be completed will be that which is at the lowest point in the well (or furthest extent from the wellhead, dependant of wellbore geometry). The process will be completed by incrementally (zone by zone) moving up the well (from toe to top). Once a given zone is fractured a temporary plug may be inserted into the well just above that zone, in order that fracture fluid does not traverse down to the previously fractured zone once fracturing of the next zone commences.

The fracture fluid is typically water-based and pumped into the well at pressure. Thus the fluid will seek to exit the well at the perforated locations. The fluid pressure is such that the fluid is forced out of the casing, through the perforation sites, breaks down the thin barrier of cement, and progresses on into the formation. The pressure of the pumped fluid is increased to a level where the resultant localised stress exceeds that of the local rock strength, and continued application thereafter initiates fast-fracture of that formation. The resultant fracturing of the formation creates a greater number of fissures along the weaker planes of the formation, thus increasing its permeability and creating channels for the product to flow from the reservoir back towards the wellbore with greater ease. In order that the newly created channels don't close up once the pumped pressure of the fracture fluid is reduced, a granular materiel, typically sand, is added to the hydraulic fracture fluid. This sand is carried into the new channels with the fluid flow and subsequently hold the new channels permanently open once fracturing is complete. The sand being more porous than the surrounding formation thus still provides a channel for the product to traverse along. Such granular material is commonly known as "proppant".

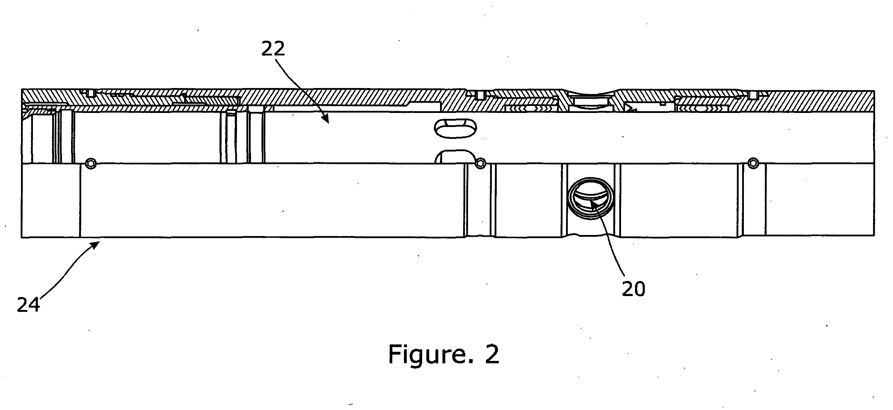

Alternatively, fracturing of a cased wellbore can be achieved using a sliding sleeve based approach. Rather than perforating a conventional steel tube type well casing using explosives, the casing itself is manufactured with the inclusion of multiple sliding-sleeve style valves for example as illustrated in figure 2. Each sliding sleeve valve is hollow along its major axis, allowing fluid to traverse through it, and incorporates a number of radially positioned fluid egress orifices 20 around the circumference, which may be opened by a sliding action of the sleeve 22. Each valve is positioned in the casing 24 at a required fracture location. As with the former method, a given wellbore will incorporate a number of fracture zones, and each zone can consist of multiple fracture clusters.

With the sliding sleeve approach, a single fracture cluster is formed using one sliding-sleeve valve having multiple fluid egress orifices 20. Again, the lowest fracture zone will be completed first with the process being incrementally repeated, on a zone-by-zone basis, moving up the well until fracturing of the whole well is achieved. However, with this approach temporary plugging of a previous zone is not required before fracturing of the next zone can commence. This is because it is typical to operate such valves by means of pumping a ball down the wellbore (with the aid of the applied pressure of the hydraulic fracture fluid) to operate a given cluster of valves, in a given fracture zone. Each valve is constructed with a specifically sized conical ball-seat. When the fluid pressure is greater than the internal wellbore pressure the ball will move down the well towards a given valve. As the ball approaches (and endeavours to pass through) the valve it comes to rest in the conical valve seat, which is specifically sized to house the deployed ball. The fluid pressure remains, which exerts a pressure on the exposed face of the ball and initiates a linear movement (sliding) of an internal valve seal mechanism to an extent that the radially positioned egress points of the valve become exposed and a fracture fluid path from the wellbore to the formation is created. The sliding seat continues to move until the mechanisms hits a stop.

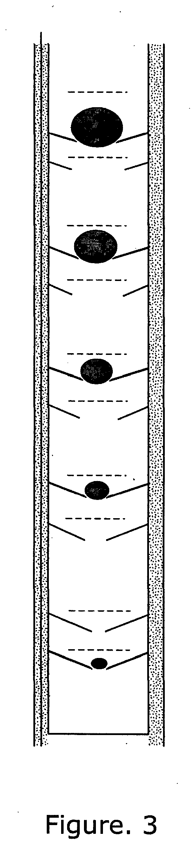

Two types of valves are installed in each fracture zone, one known as a flexi-seat sliding sleeve valve, the other as a hard-seat sliding sleeve valve. All valves except the lowest in a given fracture zone are of the flexi-seat type. Only the final valve in a given zone is of a hard-seat construction. With the flexi-seat valve the conical ball seat is manufactured in such a way so as to release the ball once the moving mechanism reaches the associated valve stop. This allows the ball to traverse on to the next valve in a given zone, allowing for the process to be repeated at that lower valve. With the hard-seat valve, positioned at the final point in a given fracture zone, the conical ball seat is manufactured in such a way so as not to release the ball once the moving mechanism reaches the associated valve stop, thus ensuring no hydraulic fracture fluid can pass on to a previously fractured zone. As the process is repeated for higher fracture zones the size of the ball and associated valve seat incrementally increases. That is, the first (and lowest/furthest from wellhead) fracture zone will be constructed with valve clusters having ball seats of the smallest size, with all upstream valves having incrementally increasing valve seat sizes (see figure 3). Thus the ball associated with that lowest cluster of valves will successfully pass through all upstream valve clusters, without operating them, but will successfully seat in the series of the lowest valve clusters for correct operation. Once fracturing of that zone is compete and it is desired that fracturing of the next fracture zone (upstream) commences a slightly larger ball is deployed, which is designed to be of a size to again pass through all upstream valve clusters, and only successfully seat in the valve cluster of the second fracture zone. In this way each valve cluster has an individually sized ball associated with it, thus ensuring that, if the correct ball is deployed, only the valve clusters of a given zone will be correctly operated at any instance.

Real-time control of the fracturing process is notoriously difficult, whichever method of fracture control is employed. Very little real-time monitoring information is typically available. The current industry standard techniques for providing any real-time feedback are based on utilising wellhead pressure and flow meters associated with the hydraulic fracture fluid apparatus. These, along with proppant and fluid volumes are used to define how effective a given fracture operation is progressing, determine when sufficient fracturing has occurred, and identify when any operational problems may arise.

A number of issues can be associated with the fracturing process, pack off and cement washout being two of the more concerning, independent of the method used. When considering a sliding-sleeve based process, issues such as ball failure and unsuccessful valve operation are two prominent issues. Pack off is a scenario whereby too much proppant enters a given fracture cluster, to the extent that a particular fracture channel becomes completely blocked with an excessive amount of proppant. Such a situation can arise when a given cluster initially fractures well, and thus readily takes additional fracture fluid, but thereafter fails to continue to fracture, possibly due to variations in the structural strength of the local formation. In the extreme this can result in a situation where no further fracture fluid can enter that cluster, and a given cluster simply becomes packed with proppant. In such a situation this can result in that particular cluster not receiving sufficient fracturing whilst all other clusters within the given fracture zone receive too greater volume of fracture fluid. Thus a situation could arise whereby the packed off cluster never fractures to the required level and the remaining clusters become over fractured, with the fractures associated with these clusters either extending too far into the reservoir or the fissures simply opening too wide. In either case a greater than necessary amount of fracture fluid and proppant will have unnecessarily have been used for that zone. Moreover such a situation would result in a suboptimal fractured zone, which may result in lower than optimal production.

A similar, but different, issue related to the fracturing of a multi-cluster zone is one where either an individual or certain number of clusters within a fracture zone fracture more readily than other clusters within that zone. This can typically happen as a result of varying rock hardness across a given zone, and can have the same net result as that of a pack off issue, that is insufficient fracturing of some clusters within a zone whilst the remaining clusters subsequently receive too greater fracturing, again leading to a suboptimal production from the zone in question.

In both situations it is difficult for the operator to detect the occurrence of this issue. Typically the operator will have to be skilled in the art of interpreting variations associated single-point (wellhead) flow and pressure instrumentation results to identify the existence of such situations. In both cases simply increasing either the fracture fluid flow rate or pressure would not remedy the situation. Such action would simply lead to a situation where the clusters that were already successfully fracturing would fracture to an even greater extent, and the clusters failing to correctly fracture would continue to fracture in a suboptimal manner, the net result being no greater volume of product being released from the reservoir.

In this situation it is common to add a 'diverter' to the fracture fluid. A diverter is simply an additional granular material, one that has a larger particulate size than that of the proppant. The particulate size is such that it will readily flow into large fissures in a fracture zone but fail to enter the smaller ones. In this way, with the flow rate and hydraulic pressure retained, the readily fractured clusters will temporarily become blocked and a greater volume of fracture fluid and proppant will be diverted to the lesser-fractured clusters. If successful this can have the net result of more evenly distributing the successful fracturing within a given zone. While it is difficult for the operator to detect the occurrence of either pack off or suboptimal fracture distribution across a given zone, it is equally difficult for the operator to easily gain insight into whether the application of a diverter has been successful using only the single-point wellhead pressure and flow rate instrumentation.

As important as gaining knowledge of how well a fracturing operation has distributed across a given zone is gaining knowledge of how far a given fracture extends into the associated reservoir. It is common practice for multiple wells to service a single reservoir. As such, overly fracturing any given cluster within a well could lead to a situation whereby the associated fissures simply extend too far into the reservoir, to a point where they may intersect with a neighbouring well. Such a situation could lead to an increase in product extraction from the fractured well but to the detriment of a corresponding reduction of product extraction from the intersected well. The object is, rather, to achieve optimal fracturing of each well, such that maximum product extraction can be achieved with each, without detrimentally affecting the other. It is again difficult for the operator to gain this knowledge with the conventional instrumentation.

A further issue associated with hydraulic fracturing of cased wellbores is that of cement washout. This is a phenomenon that can happen at any location in the wellbore, where there is a breach through the wall of the casing, such that the cement is exposed to the fracture fluid. A modest amount of localised cement washout is expected (and desired) at fracture egress ports during normal operation, either immediately after the perforation is created in perforation-and-plugging type operations, or immediately after a valve has opened during "sliding sleeve" type operations. This characteristic is desired in order that the local cement barrier between the casing and the formation is eroded such that the fracture fluid may propagate from the wellbore towards the subsequently exposed local formation. If operations are engineered correctly, the "expected" cement washout should remain local to the current operational egress point, and should only persist for a duration sufficient to erode the localised cement, typically of the order of 1 second. However, it is not uncommon for this cement washout to exceed the expected spatial bounds, persisting for far longer periods than anticipated. Such situations arise when the cement bond between the outer extreme of the wellbore casing and the formation is suboptimal, or in the event that the cement has cured suboptimally. In such cases the initial localised washout commences as expected, creating a small void between the outer extreme of the wellbore casing and the formation.

However, once this void has been created, situations may arise whereby the cement washout process fails to terminate and the void volume expands beyond desired limits, for example due to suboptimal cement bonds. In other words, situations arise in which fracturing initiates, but the cement washout process persists for too long, or whereby fracturing does not initiate as expected and only the cement washout process persists, eroding more and more casing cement.

In the extreme, this can create channels behind the casing which can extend for many meters or tens of meters, or further, either upstream, downstream, or both upstream and downstream of the initial void location. Fluid may thereafter inadvertently propagate along such channels rather than along the inner void of the casing. Such fluid may be the fracture fluid injected during the fracturing process, or worse still, if remaining undetected could possibly be product exiting the reservoir during the well's production life cycle. If the former, one concern would be the waste for fracture fluid and proppant, causing an unnecessary operational cost increase, but more concerning is a situation whereby the washout either extends from one fracture zone to another, or from one fracture zone a considerable distance towards, or even all the way to the wellhead. The former can lead to a situation where when fracturing one zone the operator is unknowingly pumping fracture fluid to a previously (or yet to be) fractured zone. Thus not optimally fracturing the intended zone, as well as possibly also over fracturing a previously fractured zone. The latter could more catastrophically lead to environmental integrity issues, either potentially resulting in aquifer contamination, or even surface discharge. In other words, it is possible for channels to be created that originate from one fracture zone, propagating in an upstream wellbore direction that could extend sufficiently that a channel is either created between the fracture stage and a formation depth coincidental with the location of a natural aquifers, or worse, that extends to the wellhead.

It was earlier noted that cement washout could occur at any location in the wellbore where there is a breach through the wall of the casing, not just at the design depths of fracture fluid egress ports. For example, washout may even occur at wellbore casing joint locations, a casing joint being the wellbore position at which two sections of casing are connected together. Casing is delivered to site in standard lengths, as the casing is deployed in the wellbore a single length is lowered into position, as the upper portion of the section reaches the top of the well the following section is connected to the former and the installation process continues in this manner. In certain situations, integrity issues with such casing joints could arise, either as a result of a suboptimal connection completion during installation, or as a result of degrading over time. In the extreme an orifice may be created between the inner bounds of the casing and the cement barrier between the casing and the formation. Thereafter, during the fracturing process, when fluid is injected into the well, a situation may arise whereby the cement encapsulating the casing is broken down at one of these locations, creating a void behind the casing, rather than, or in conjunction with, fracture initiation successfully taking place at the desired fracture zone depth. Regarding prominent issues associated with the sliding-sleeve fracturing process, the most catastrophic issue is that of ball failure in which a given fracture zone ball either disintegrates during operation or, as a result of the fluid pressure, extrudes through the (final) hard seat sliding sleeve valve. In both scenarios the result is that, rather than successfully preventing fracture fluid from traversing on to a previously fractured zone this fluid can subsequently, and readily, reach that zone and re-enter previously fractured clusters. This would lead to a situation where, if left undetected, the current zone would again fail to optimally fracture and potentially the previously fractured stage could again subsequently become over fractured. As before, the operator is reliant on single point wellhead pressure and flow rate instrumentation to provide indication of the occurrence of such an issue, with a short duration large drop in pressure indicative of this problem, but again surety of interpretation is not always readily achieved with this approach. This is a common problem, and in the extreme this can lead to a well which may have one zone drastically over-fractured and one that is fractured to a minimum extent, if at all.

A further problem associated with sliding-sleeve fracturing is that of unsuccessful valve operation. That is, it is possible, during completion of the well that a valve either becomes damaged of fouled in someway, for example a valve can become partially contaminated with casing cement. Such a situation can lead to a situation whereby subsequent correct operation of that valve would potentially be improbable. In this case it is common for the valve to become stuck, leading to a situation where the valve (either initially or permanently) fails to open thus not allowing fracture fluid to exit the casing and penetrate the formation to initiate fracturing. In this situation it will be extremely difficult for the operator to detect with conventional wellhead equipment. In the event that the issue is correctly detected uncertainty may still arise around which valve is experiencing incorrect operation in a multi-cluster.

More fundamentally though, an operational problem can arise whereby an operator inadvertently deploys the incorrect ball for a given stage. For example if the ball required for the fracturing of an upper zone (a 'large' diameter ball) is mistakenly deployed when operationally it is required to fracture a lower stage (a 'small diameter ball) a situation could arise whereby the operator is unknowingly fracturing the wrong section of the well completely. Moreover all intervening zones (between the zone originally designated for fracturing and the actually fractured zone) would also subsequently fail to become fractured. Single-point wellhead instrumentation may provide indication of such a scenario but the operator may fail to correctly interpret such information.

It would be desirable to address these and other related problems of the prior art, for example to provide real-time monitoring apparatus and processes that deliver greater assurance of many aspects of the overall wellbore fracturing process, thus providing greater product extraction and associated safety assurances.

WO 2012/072981 discloses monitoring hydraulic fracturing in well formation using distributed acoustic sensing.

### Summary of the invention

The invention relates to the utilisation of an optical fibre based distributed acoustic sensing (DAS) instrument, connected to a sensing optical fibre which is deployed along part or all of the length of a wellbore, for the purpose of real-time operation assurance during a rock formation fracturing process.

The invention provides a method of automatically monitoring a hydraulic fracturing operation as set out in claim 1. The method comprises carrying out recognition of the acoustic signature of washout automatically, and may comprise issuing warnings, such as visual and/or audible warnings automatically to an operator. The method may further comprise measuring a spatial extent of said washout from a spatial distribution of said acoustic signature, and providing a display of the spatial extent.

The acoustic signature of cement washout may be analysed to identify a central region proximal to an egress point in the casing, and one or more branch regions each of which moves away from the egress point over time in association with related cement washout activity progressing along the wellbore. Typically, there may be two such branch regions which simultaneously move away from the egress point in opposite directions along the wellbore, at similar speeds. Typically, the acoustic signature may be analysed to identify a central region and the one or more branch regions which initiate at a time of opening of a valve to permit fracture fluid to pass through an egress point in the casing, and detecting the washout may comprise detecting the time of opening, for example including detecting a pressure wave front propagating rapidly in both directions along the wellbore at the time of opening of the valve.

The spatial extent of said washout may be detected from the spatial extent of the one or more branch regions.

Typically, the acoustic signature of cement washout comprises an acoustic frequency peak an acoustic signal detected by the distributed optical fibre sensor, and the method may comprise detecting or looking for this peak, which may typically occur in a said branch region of the acoustic signature. Detection of the acoustic frequency peak may be carried out in various ways, but for example it may be assumed to have one or more particular properties which are sought for such as a height of at least double the associated background acoustic signal, a full width at half maximum (FWHM) of less than 100 Hz, an apex between 40 Hz and 300 Hz (or more preferably between 60 Hz and 200 Hz), and so forth as described elsewhere herein.

The method may comprise determining a spatial extent of the cement washout by determining a spatial position of the acoustic frequency peak, and similarly, may comprise determining a time persistence of the washout process by determining a time persistence of the acoustic frequency peak. Packoff of cement washout may be detected by measuring or detecting diminishment of the acoustic frequency peak, for example to below a predetermined threshold level or fraction of the peak strength of the acoustic frequency peak.

The invention also provides apparatus for monitoring a hydraulic fracturing operation as set out in claim 15.

The analyser or washout detector may be arranged to automatically detect possible cement washout events, in various ways as discussed herein, and optionally to provide specific warnings to an operator, for example in addition to display of the acoustic signal itself in a suitable form.

For example, the washout detector may be arranged to detect in the acoustic signal a central region proximal to an egress point in the casing, and one or more branch regions each of which moves away from the egress point over time in association with related cement washout activity progressing along the wellbore, and/or to detect an acoustic frequency peak in the acoustic signal and to use the acoustic frequency peak in detecting the acoustic signature of washout.

We also describe a method of monitoring a hydraulic fracturing operation in a wellbore within a rock formation, the hydraulic fracturing operation including delivering a valve drive component along the wellbore to a valve located in the wellbore within the rock formation, the method comprising: using a distributed optical fibre sensor having one or more sensing fibres disposed along the wellbore to detect an acoustic signature of the valve drive component engaging with the valve. In similar terms, the invention also provides a method of monitoring a hydraulic fracturing operation in a wellbore, the hydraulic fracturing operation including delivering a valve drive component along the wellbore to a valve arranged to permit fracturing fluid to egress from the wellbore, the method comprising using a distributed optical fibre sensor having one or more sensing fibres disposed along the wellbore to detect an acoustic signal from the wellbore, and identifying or recognizing from the acoustic signal an acoustic signature of the valve drive component. The step of identifying or recognizing may be carried out automatically by a computer, and thereby may be used to generate event data representing aspects of one or more events involving a valve drive component, alerts, alarms, and similar, for example for display to a user.

The identified acoustic signature may be, for example, an acoustic signature of the valve drive component passing along the wellbore, in which case the method may include automatically deriving a position, track, or other information about of the valve drive component from the acoustic signature.

The wellbore will typically be in a rock formation, the hydraulic fracturing operation including delivering a valve drive component (such as a ball) along the wellbore to a valve located in the wellbore within the rock formation.

We also describe identifying from the acoustic signal an acoustic signature of the valve drive component engaging with the valve, for example with a sliding sleeve valve, and the acoustic signature of the valve drive component engaging with the valve may then be an acoustic signature of the ball becoming seated in the sliding sleeve valve. The method may also comprise identifying from the acoustic signal an acoustic signature of fracture events in the rock formation resulting from the valve drive component engaging with the valve and consequent successful operation of the valve. The method may also comprise identifying from the acoustic signal a lack of acoustic signature fracture events in the rock formation resulting from a failure of the valve to operate successfully.

Described methods may involve monitoring a hydraulic fracturing operation in a wellbore within a rock formation, the hydraulic fracturing operation including delivering a valve drive component along the wellbore to a valve located in the wellbore within the rock formation, the method comprising: using a distributed optical fibre sensor having one or more sensing fibres disposed along the wellbore to detect an acoustic signature of a failure of prior engagement of the valve drive component with the valve. An acoustic signature of fracture events in rock formations may be identified downstream of the valve subsequent to detecting an acoustic signature of a failure of prior engagement of the valve drive component with the valve, and determining whether the failure was due to penetration of the valve drive component through the valve or due to disintegration of the valve drive component dependent upon a length of delay between the two acoustic signatures.

Properties of an event involving the valve drive component may be calculated from aspects of the acoustic signature propagating away from the event along the wellbore. For example, the acoustic signature of the valve drive component may indicate one or two wave fronts triggered at the same time by an event involving the valve drive component, the wave fronts propagating in one or both directions along the wellbore. The method may then comprise determining an origin of the two wave fronts and identifying properties such as the position and/or time of the event as the origin of the wave fronts.

We also describe apparatus for putting the above methods into effect, for example a valve drive component detector arranged to receive an acoustic signal from a distributed optical fibre sensor and to detect from the acoustic signal an acoustic signature of the valve drive component. The apparatus may also comprise the distributed optical fibre sensor.

The valve drive component detector may, for example, be arranged to generate a position or a track of the valve drive component, to recognise an impact of the valve drive component at a valve, to recognise, from the acoustic signal, failure of a valve to open after recognised impact of the valve drive component at a valve, to recognise, from the acoustic signal, failure of a valve drive component, and so forth. The valve drive component detector may be arranged to recognise from the acoustic signature two wave fronts triggered at the same time by an event involving the valve drive component, the wave fronts propagating in both directions along the wellbore, and to identifying the position and/or time of the event as the origin of the wave fronts. The apparatus may then be arranged to issue visual or audible alerts or warnings related to the determined information about the valve drive component to a user.

We also describe a method of monitoring a hydraulic fracturing operation in a wellbore within a rock formation, the method comprising using a distributed optical fibre sensor having one or more sensing fibres disposed along the wellbore to detect a seismic signature of a fracture event in the rock formation, the fracture event resulting from the hydraulic fracturing operation.

We also describe a method of monitoring a hydraulic fracturing operation comprising using a distributed optical fibre sensor to detect one or more acoustic signatures of washout of cement surround a casing of the wellbore.

We also describe a method of monitoring a hydraulic fracturing operation in a wellbore within a rock formation, the hydraulic fracturing operation which includes delivering a valve drive component along the wellbore to a valve located in the wellbore within the rock formation, the method comprising using a distributed optical fibre sensor having one or more sensing fibres disposed along the wellbore to detect an acoustic signature of the valve drive component engaging with the valve.

We also describe a method of monitoring a hydraulic fracturing operation in a wellbore within a rock formation, the hydraulic fracturing operation including delivering a valve drive component along the wellbore to a valve located in the wellbore within the rock formation, the method comprising using a distributed optical fibre sensor having one or more sensing fibres disposed along the wellbore to detect an acoustic signature of a failure of prior engagement of the valve drive component with the valve.

We also describe apparatus corresponding to the described methods, for example a distributed optical fibre sensor interrogator which is arranged to carry out any of the methods when coupled to one or more suitable sensing optical fibres disposed within a wellbore to be monitored, and such an interrogator in combination with one or more sensing fibres so disposed.

Computer program software may be provided which is arranged to carry out parts of the described methods when implemented on suitable computer apparatus, for example on such computer apparatus in which data describing the detected acoustic signals is provided.

### Brief summary of the drawings

Embodiments of the invention will now be described, by way of example only, and with reference to the accompanying drawings of which:
Figure 1 shows schematically how the invention may be implemented in a hydrocarbon production well;
Figure 2 provides a cutaway view of a single sliding sleeve hydraulic fracture valve;
Figure 3 shows an arrangement of a series of multiple-cluster fracture zones within a hydrocarbon production well, including the variation of valve balls as a function of the well's zone number, such that by using sequentially balls of increasing size, each zone can be fractured in turn by operation of the relevant valve;

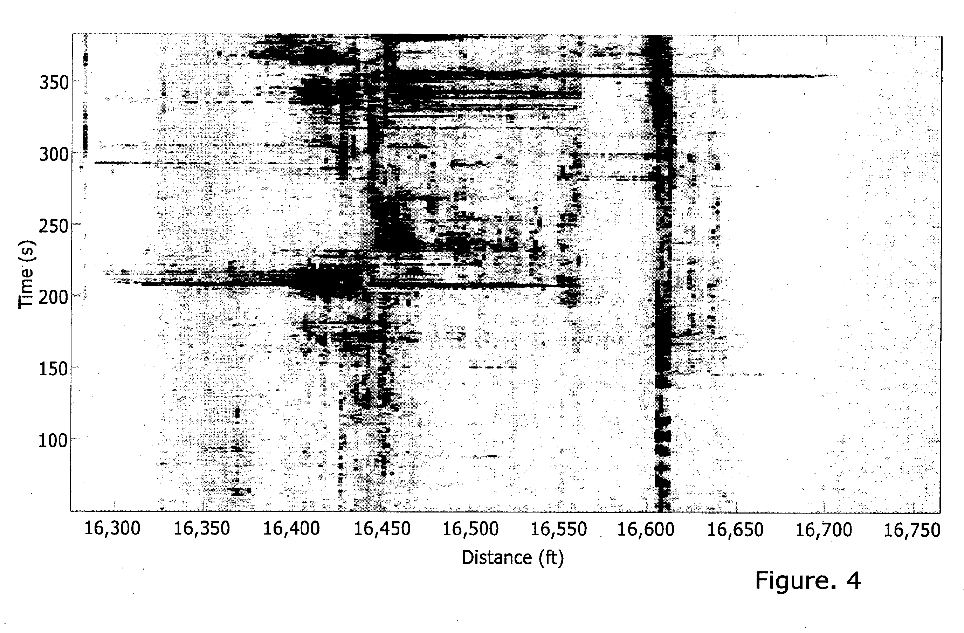

Figure 4 illustrates an acoustic vibration signal, determined as a function of time and distance along a well using an arrangement as illustrated in figure 1, in particular those signals relating to the detection of seismic waves propagating through the local formation as a result of multiple fracture events;
Figure 5 illustrates an acoustic vibration signal, determined as a function of time and distance along a well using an arrangement as illustrated in figure 1, in particular those signals relating to the curvature in the distance/position vs time graph of a curve or curved wave front associated a single seismic wave propagating through the local formation as a result of a given fracture event;
Figure 6 illustrates an acoustic vibration signal, determined as a function of time and distance along a well using an arrangement as illustrated in figure 1, in particular those signals relating to the detection of fracture dynamics and associated seismic waves propagating through the local formation as a result of multiple fracture events at all clusters within a given fracture zone;
Figure 7 illustrates an acoustic vibration signal, determined as a function of time and distance along a well using an arrangement as illustrated in figure 1, in particular those signals relating to the detection of cement washout within the wellbore;
Figure 8 plots against well depth the frequency distribution of the acoustic signal at a single point in time, showing an acoustic signature of cement washout having a narrow bandwidth characteristic;
Figure 9 is similar to figure 8, but showing further signatures having narrow bandwidth characteristics;
Figures 10 to 12 show frequency characteristics of the acoustic signal at a single point in depth and time;
Figure 13 illustrates an acoustic vibration signal, determined as a function of time and distance along a well using an arrangement as illustrated in figure 1, in particular those signals relating to the detection of a ball drop along the wellbore;
Figure 14 illustrates an acoustic vibration signal, determined as a function of time and distance along a well using an arrangement as illustrated in figure 1, in particular those signals relating to the detection of both correct and incorrect valve operation at a number of individual clusters within a given fracture zone;
Figure 15 shows at higher time resolution the event of a ball engaging in a valve labelled as 70 in both figures 14 and 15;
Figure 16 shows propagation of a wave front caused by engagement of a ball with a valve;
Figures 17 and 18 illustrate the initiation of fracture fluid exiting a valve at the time of a ball seating in the valve and leading to an associated propagating wave front;
Figure 19 illustrates the effect of a ball engaging with a valve at event 70, and delayed opening of the valve at event 84;
Figures 20 and 21 show an acoustic signature of ball failure by extrusion through a valve, with figure 22 showing subsequent engagement of the ball with a downstream valve;
Figures 23 and 24 show optional aspects of the analyser 14 for use in carrying out automatic analysis of the acoustic signal to identify and respond to the various acoustic signatures discussed herein.

### Detailed description of embodiments

Embodiments of the invention will now be described, with reference to the drawings, by way of example only. Embodiments of the invention provide for the sensing and measurement of acoustic data associated with all aspects of the operational process of hydraulic fracturing, using an optical-fibre based, distributed, vibro-acoustic sensing (DAS) method. A distributed optical fibre sensor permits measurements of vibrations in the environment about the fibre, as a function of the length of the fibre, providing an array of data for which a large number of discrete sensors would otherwise be needed. Such an array of data can provide for a real-time acoustic profile of the well, covering the full length of the well if necessary, or extended subsections of the well.

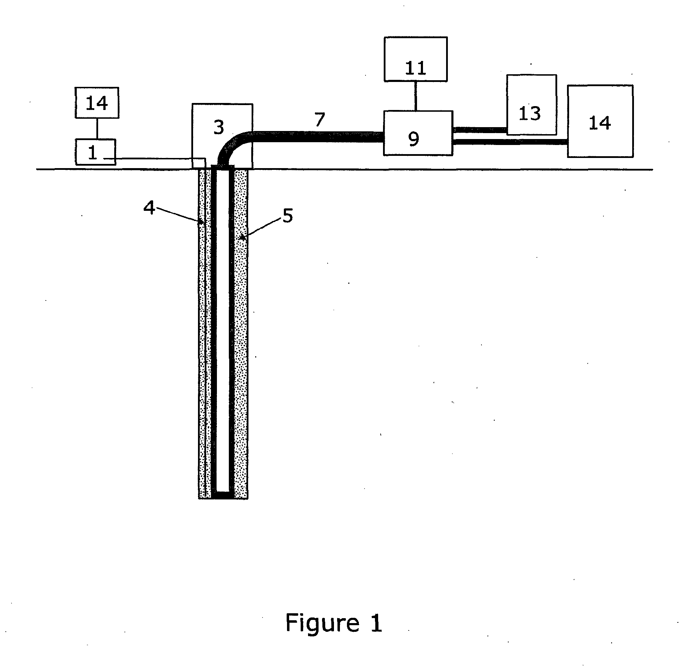

Figure 1 shows a wellbore casing 5 disposed in a wellbore descending from a well head 3. A hydraulic fracturing unit 9 is coupled to the wellbore by link 7, and delivers to the wellbore, through the link, hydraulic fracturing materials 13 and 14, for example a fracture fluid and a proppant. A control and monitoring unit 11 controls and monitors the pressure, mix, rate of delivery and other properties of the fracturing materials and their delivery to the wellbore.

An interrogator 1 is arranged to deliver probe light into and measure properties of probe light backscattered within sensing optical fibre 4 disposed within the wellbore, and these properties are used to determine a measure of the vibrational excitation exerted on the sensing fibre. The resulting acoustic data may be analysed and displayed in various ways by analyser 14, which could be provided by a general purpose computer such as a laptop.

Examples of distributed optical fibre sensing technology which could be used to implement the present invention in its various aspects is discussed for example in WO2008/056143 and WO2012/063066. A localised vibration exerted on the sensing fibre may be detected by analysing various properties of backscattered probe light as a function of distance along the sensing fibre. In some embodiments relative changes in the intensity of light backscattered from a particular part of the fibre may be interpreted as relative changes in vibrational intensity, effectively dividing the sensing fibre into a plurality of discrete sensing locations spanning the entire length of the fibre. However, a variety of other more complex schemes may be used, for example phase-sensitive optical-time-domain-reflectometry (OTDR), which is based on a form of coherent OTDR.

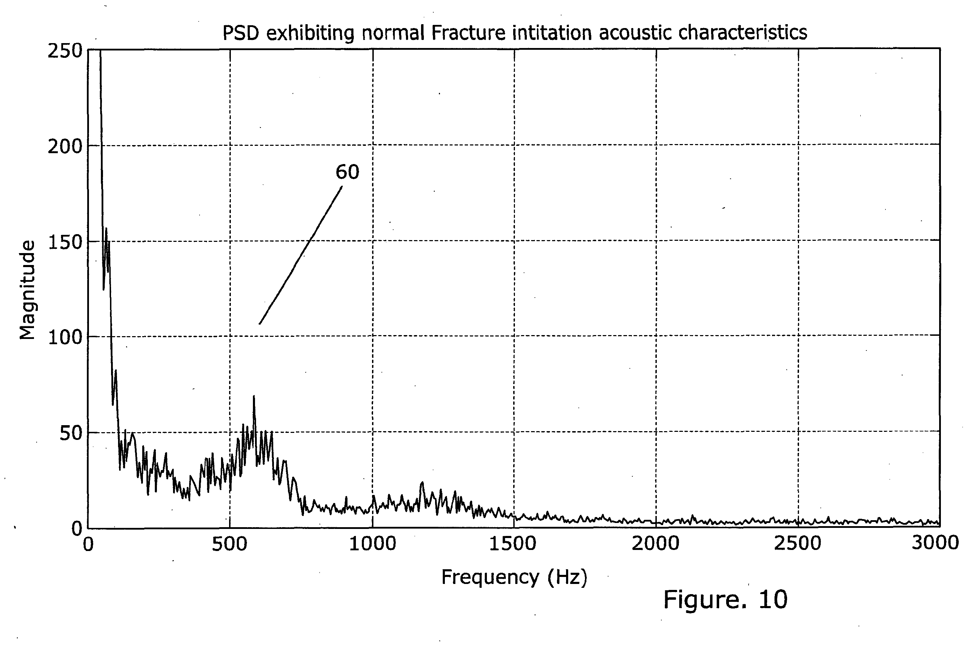

The relationship between the strength of vibration at the sensing fibre in total or in particular frequency bands, and the resulting acoustic signal derived at the interrogator in total or in particular frequency bands, will depend to some extent on the nature of the coupling of the vibration in to the fibre, and the optical techniques used to interrogate the fibre. Generally, in this document the figures showing grey scale plots represent signal to noise ratio of the acoustic signal, which is approximately proportional to the power of the incident vibrations. The plots of frequency at a particular time in figures 10 to 12 are plots of total magnitude of the acoustic signal, which again is approximately proportional to power of the sound incident on the optical fibre.

The properties of light backscattered within the fibre may be properties of light that has been Rayleigh backscattered within the sensor optical fibre, but could equally be properties of light that has been Raman or Brillioun backscattered, or any combination or permutation of each.

The vibration signal may be within particular frequency bands, or over broad ranges of acoustic wavelengths and/or frequencies, and may represent detected acoustic waves, pressure waves (including seismic waves), and/or other vibrational modes. The features in the vibration signal which are detected may be spatial peaks or troughs in the total vibration signal or power, periodic signals, features in particular frequency bands or combinations of features in different frequency bands, or any other identifiable vibration feature.

The optical sensing fibre is located within the wellbore structure for which the hydraulic fracturing process is to be completed. The sensing fibre may be installed within, on the outside, or even embedded in a wall of the casing within the wellbore. The optical sensing fibre may be attached to the exterior of the casing as the casing is being deployed in the wellbore. In this case the optical sensing fibre will traverse the length and path of the wellbore, either from top to toe, or at least far enough into the well so as to cover all fracture zones within the well. In this case the optical sensing fibre will subsequently be retained in position, and well coupled to the surrounding formation, as a result of the subsequent cementing of the annulus between the outer surface of the casing and inner surface of the wellbore.

Once the sensing optical fibre is installed and fracturing of a given zone within the well commences the invention provides for interrogation of the sensing fibre such that a plurality of acoustic signals may be simultaneously acquired over the full length or one or more selected lengths of the well. As the sensing fibre traverses the length and path of the well specific acoustic signals within the plurality of acquired acoustic signals may be correlated to physical fracture zone locations within the well from knowledge of the fibre length.

Accordingly, the invention provides a method of real-time distributed monitoring of the hydraulic fracturing process for the purpose of operational assurance irrelevant of the specific fracture process implemented, comprising: disposing a sensor optical fibre along a length of the wellbore; optically coupling an interrogator to an end of the sensing optical fibre; using the interrogator to measure vibration signals at a plurality of locations along the fibre (as a distribution along the fibre) by detecting properties of light backscattered within the fibre from the plurality of locations; detecting the environmental vibration signals such that an acoustic profile of the well can be attained indicating what is actually happening during the fracturing process.

One aspect of the invention monitors for knowledge of the success of the fracturing process at an individual fracture cluster can be ascertained; using a distributed fibre optical sensor extending along the wellbore to detect the localised environmental seismic signals arising as a result of the micro-seismic propagating signals associated with the fracture dynamics of the cluster being fractured.

That is, as fluid pressure increases at a fracture cluster site greater stress is exerted on the corresponding local formation. As the fracture fluid enters the formation fissures are created and forced to open wider. As such increasing stress concentrations are exerted at the tip of the crack. This localised build up of stress subsequently leads to crack growth, if the crack continues to grow sufficiently it's length can ultimately exceed that of the critical crack length for which the formation can support it's load. In such a situation fast fracture occurs, where the crack rapidly propagates through the formation. Such a fracture event releases impulsive energy into the surrounding (localised) environment in the form of a propagating seismic wave, the level of released energy typically being related or proportional to the rate and extent of the fast fracture. Monitoring seismic vibrations detected at the sensing fibre, for example extending at least over the spatial extent of the associated fracture zone, can thus further provide knowledge of the origin of any single detected propagating seismic wave. The greater the number, extent, and duration of detected seismic waves or associated origins, the greater the success of the fracture operation for that given cluster.

Accordingly the extent of the propagation path of a given cluster fracture can also be detected with the current invention. A seismic wave arising from a given fracture event will give rise to a distribution of vibration signal in space and time at the sensing fibre which depends on the position of the fracture event relative to the sensing fibre. Typically, the speed of the seismic wave will be approximately constant throughout the formation, although it may vary to some extent, so that properties such as distance of the fracture event from the sensing fibre can be determined from the space-time distribution.

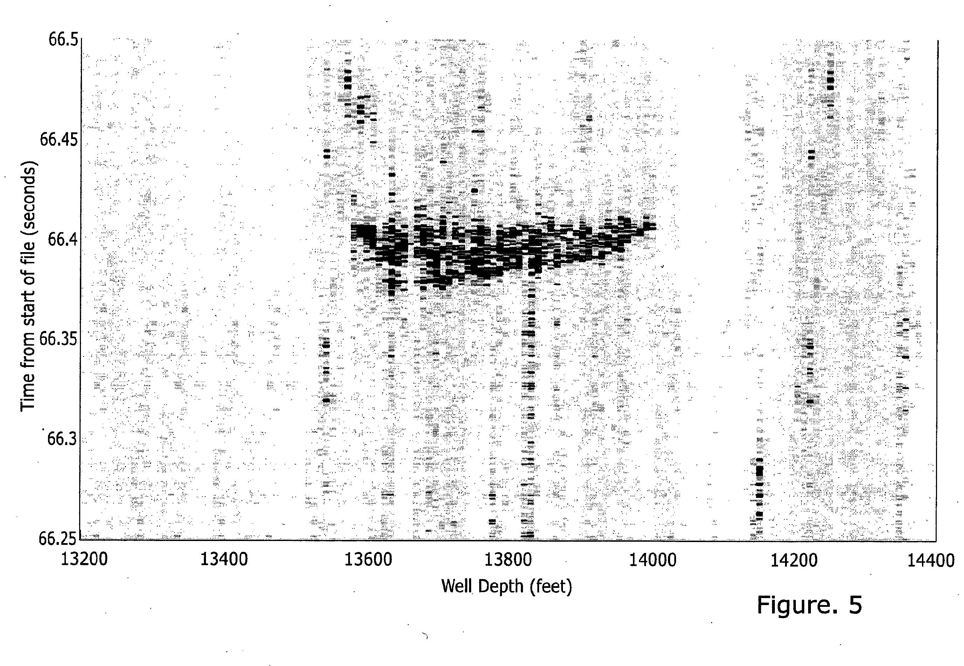

Figure 5 illustrates a seismic signature from a fracture event detected at the sensing fibre. A fracture event taking place close to the fibre will typically give rise to a V-shaped or V-fronted signature in the space-time graph, with the gradient of the signature front in each direction being directly related to the speed of the wave within the formation. For fracture events taking place further away from the sensing fibre, an increased radius of curvature proximal to the apex of the signature front will be apparent, and from geometrical considerations it will be seen that the radius of curvature will increase with increasing distance of the fracture event from the sensing fibres. This distance can therefore be determined from an analysis of the shape of the signature, which could be said to be of a broadly catenary or parabolic form.

Similarly, the position of the fracture event in a dimension along the sensing fibre typically corresponds to an apex of the signature front. The apex, shape, and/or other shape and curvature properties, and therefore parameters of the fracture event such as position in various dimensions, can be determined by applying signal processing procedures and/or curve fitting procedures to the vibration signal, for example a signal as illustrated in figure 5.

With the possibility of detecting the broadly parabolic or otherwise curved expansion of the detected signature front associated with any single detected propagating seismic wave it is possible to estimate or determine the origin of the associated fracture locus. Identifying the curvature and extent of the detected signature curve, and using trigonometric mathematics the Cartesian originating locus can be identified.

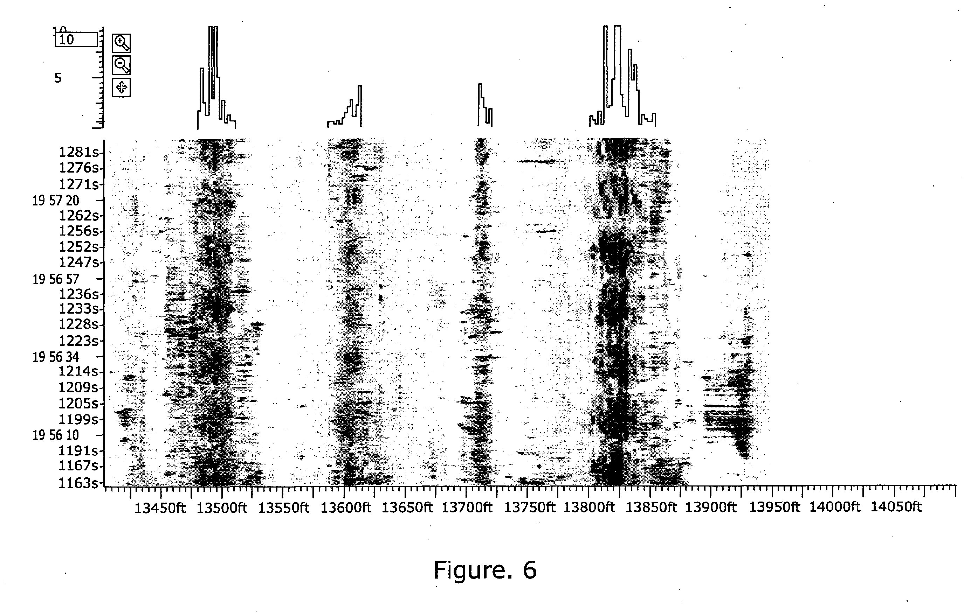

Further, the existence of pack off can be detected with the current invention. If successful fracturing at a given cluster has been identified in a plurality of detected signals spanning a spatial extent associated with that fibre. The evolution of such detected signals will be monitored as a function of time. Pack off can be identified, either automatically or with the aid of manual intervention, if it is detected that the density of detected propagating seismic wave associated with a given fracture diminishes in both frequency and space, in the extreme diminishing to the extent that they cease completely. The reduction in frequency of occurrence will directly relate to the diminishing spatial extent of such detected signals. The time-based rate of reduction in the spatial extent of the detected signals being directly related to an increase in the rate of pack off of a given cluster. Figure 6 shows the detection of the formation of fractures in multiple clusters of a fracture zone, from which it can be clearly seem the extent to which fracture activity is on-going or diminishing on particular clusters. From this or similar information, pack off situations can be readily detected.

Another aspect of the invention provides a method for the real-time monitoring of fracture distribution success across all clusters in a given zone. That is, the identification of the relevant success of fracturing of each cluster within a given fracture zone. Such identification can be achieved with the analysis of the plurality of detected signals across the spatial extent of the zone as illustrated in figure 6 such that the weighted distribution of the detected propagating seismic waves relating to the fracture dynamics associated with each individual cluster can be ascertained. Such analysis may be carried out on a processing unit associated with the interrogator, either included internal to the interrogator or external to the interrogator with a suitable connection, such that the required data can be transmitted between the two individual units. The on-going hydraulic fracturing activity could be monitored visually by an operator using data such as that displayed in figure 6, and/or automatic analysis could be used for example to provide an indicator of fracture activity in each of a plurality of regions such as at each of a plurality of clusters in a fracture zone or relating to each of a plurality of sliding sleeve or other valves.

An associated aspect of this invention provides a method for monitoring for the successful application of a diverter. If it has been detected that a given fracture zone exhibits a suboptimal fracture distribution the operator may decide to deploy a diverter. In such a situation subsequent or contemporaneous analysis of the plurality of detected signals across the spatial extent of the fracture zone will identify any weighted contribution variation as a result of the deployment of the diverter. That is, say the operator was fracturing a 4-cluster zone, and that originally it had been identified that say the fracture process for cluster 3 was suboptimal, with all remaining clusters identified as fracturing successfully. Then once the diverter had been deployed, and with the aid of subsequent analysis of the plurality of detected signals across the spatial extent of the fracture zone, it would be anticipated that the fracture characteristics identified in the detected signals associated with clusters 1, 2, and 4 would diminish shortly after deployment of the diverter whilst those associated with cluster 3 would increase, if successful implementation of the diverter was achieved. Conversely if minimal changes were observed it would indicate unsuccessful implementation of the diverter. Again, this kind of analysis may be automated if necessary, for example to provide indicators for each of a plurality of regions, and can be based on data such as that shown in figure 6.

According to another aspect, the invention provides methods of monitoring and detecting cement washout in a given wellbore by detecting acoustic signals associated with, and arising from, the cement washout at a given location within the well, and identifying one or more features in said signals, as well as suitable apparatus arranged to carry out the methods. The spatial extent of the movement along the wellbore of said features may also be measured in order to monitor the propagation extent of said cement washout using said measured movement. The signals may be signals indicative of mechanical casing vibration arising from said cement washout and the continued monitoring of said signals may determine whether the washout packs off or continues to allow fluid to pass along the resultant void and either enter the formation at an alternate location, or pass back within the casing at another casing orifice location.

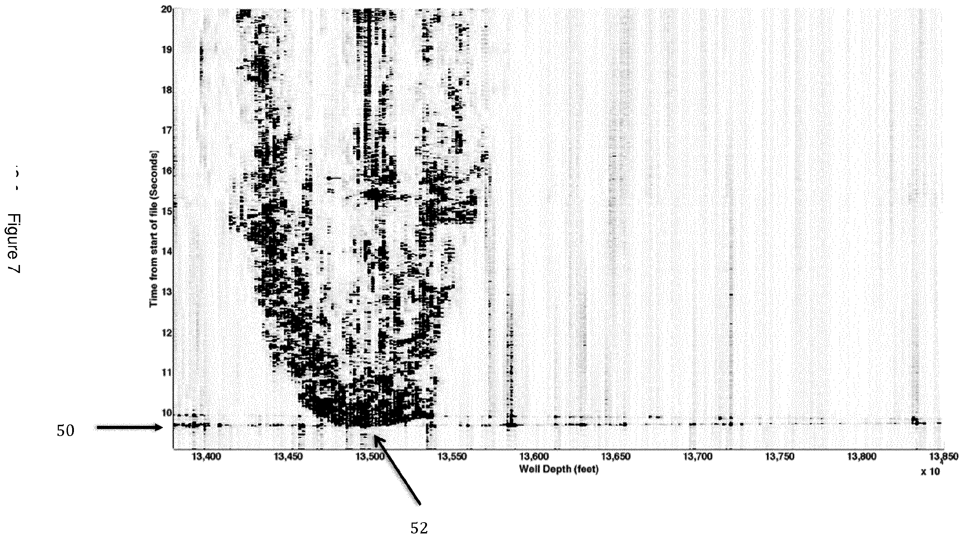

An example of an acoustic signature of cement washout is shown in figure 7. The graph represents well depth along the abscissa, and time in the ordinate, with the density of shading representing total magnitude of an acoustic signal detected by a distributed optical fibre sensor disposed along the wellbore as discussed elsewhere in this document. Just before the 10 second point, a sliding sleeve valve located at a well depth of about 4115 metres (13500 feet) opens, and fracturing fluid at high pressure passes through the corresponding egress points in the casing and into the surrounding cement. The sliding sleeve valve may open at the moment of impact of a drive element (ball) arriving at the valve seat, or a short time after that, and a propagating pressure wave front resulting from one or both of these events can be seen rapidly moving up and down the well at this time, shown in the figure as feature 50.

For a normal valve opening event, the acoustic signature of the entry of the fracturing fluid into the casing cement and the formation is limited to within about 10 feet or so of the valve. However, in the event depicted in figure 7 the entry of fracturing fluid into the cement is associated with a rapid expansion of the acoustic signature, having an apex 52 at the valve, but extending rapidly up and down the well bore. This is due to excessive cement washout channelling up and down the wellbore. The spatial extent of the cement washout can be detected and measured from the spatial distribution of the acoustic signature, with the washout shown in figure 7 extending by about 10 metres in both the upstream and downstream directions over the first second, and continuing to spread to a distance of around 20 metres or more over about the next 5 seconds before stabilising to leave an ongoing fracturing signal which may persist for many minutes, or until the pressure of the fracturing fluid is reduced

The resulting acoustic signature of excessive washout takes the form of a "W" shape of acoustic magnitude in the space-time graph, with the central branch remaining proximal to the egress point, and two expanding side branches showing the movement of the active areas of developing cement washout. Of course, in some instances, just one side branch may be seen if excessive washout occurs only above or below the egress point.

The inventors have also observed that cement washout extending from an egress point (whether deliberate in the case of a sliding sleeve valve or puncture, or accidental in the case of a casing joint failure) tends to be associated with a relatively narrow band acoustic signal. If this narrow band acoustic feature is seen to move along the wellbore over time, then this is indicative of the washout event propagating along the wellbore. The narrow band acoustic signal is thought to be indicative of the fracturing fluid flowing rapidly along the outside of the casing, proximally to the optical fibre used by the distributed optical fibre sensor.

In particular, the inventors have observed that the narrow band acoustic signal can be seen as a peak in a frequency or wavelength spectrum of the acoustic signal detected by the sensor. Conveniently, the peak may be observed to have a height of at least double the background signal around the peak, and typically has a full width at half maximum of around 100 Hz or less, and often less than 50 Hz, with a peak frequency typically between about 40 Hz and 300 Hz, and often between about 60 Hz and 200 Hz.

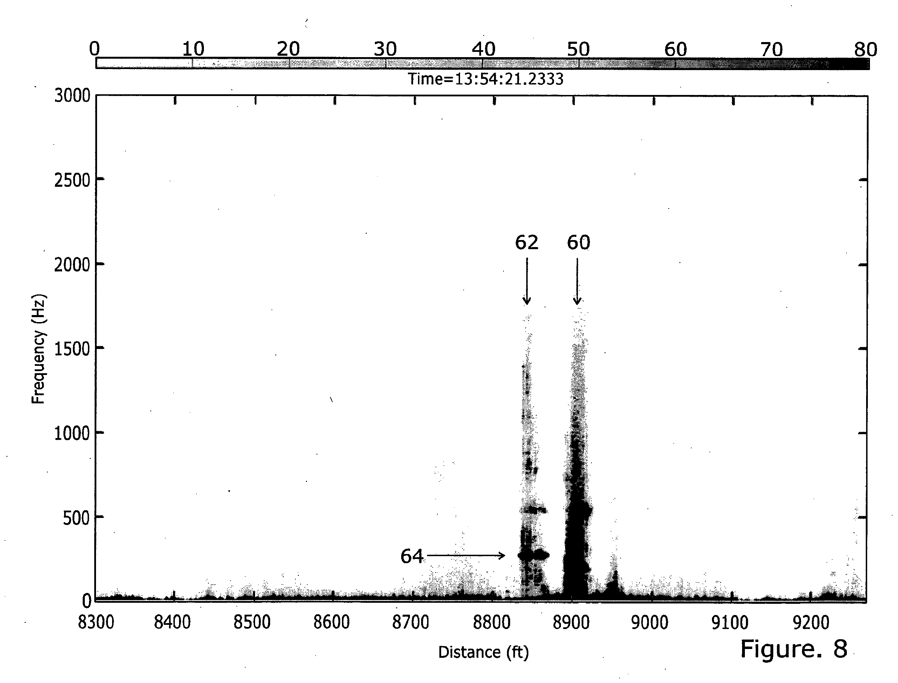

Figure 8 is a graph of magnitude of an acoustic signal detected using a distributed acoustic sensor as described elsewhere in this document, with the magnitude at various acoustic frequencies shown as a grey scale. The abscissa represents distance along the well bore, and the ordinate represents acoustic frequency.

The feature labelled as 60 in figure 8 is associated with desired small scale and localised cement washout very proximal to an egress point, and is indicative of localised fluid turbulence at the orifice through the casing, being spectrally broadband in nature, ranging from DC to approximately 2,000Hz with decaying intensity as the frequency increases. The corresponding frequency spectrum is shown more clearly in figure 10. Typically, an acoustic feature with this broadband characteristic only persists for a short period while the localised cement is eroded prior to fracture operations commencing. As cement is eroded a small void is created and fracture fluid enters the void in a turbulent manner. Such turbulence results in the aforementioned spectral characteristic. Once the void is created a path is opened to the formation and as wellbore pressure and fluid flow rate is increased formation fracturing commences. At this time, and assuming normal procedures, the spectral content of the plurality of associated signals evolves to contain far greater spectral bandwidth and complexity.

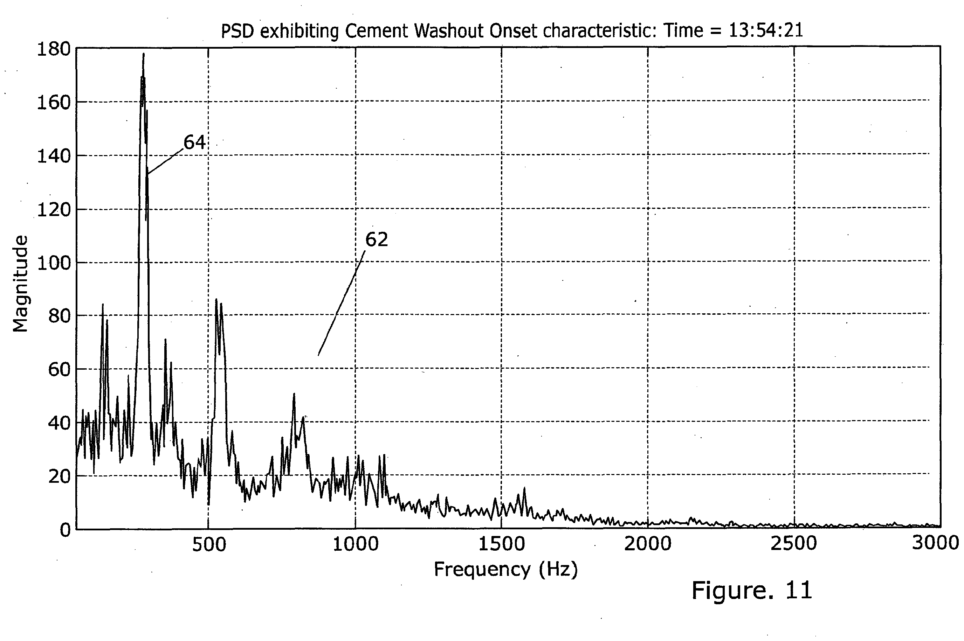

However, in the event that the initial cement washout persists, potentially to a detrimental level whereby large spatial voids are created behind the wellbore casing, the spectrum of the local acoustic signal will evolve differently, as fluid starts to propagate along the resulting channels being formed in the cement behind the casing. In the event of such a situation the spectra of the detected acoustic signal tends to exhibit a strong additional narrow bandwidth frequency component, where the frequency of the narrow bandwidth component(s) is expected to be related to the flow rate of any associated propagating fluid. An example of an acoustic signature having just such a narrow bandwidth component representative of excessive cement washout is also shown in figure 8, as feature 62, and is shown more clearly as an acoustic frequency spectrum in figure 11.

A comparison of figures 10 and 11 clearly identifies the main narrow bandwidth component as peak 64 in figure 11. The peak or mean acoustic frequency of the narrow bandwidth component may be a function of many variables, including fluid supply pressure, supply flow rate, fluid type, channel cross-sectional area, and channel volume, to name but a few. Two further narrow bandwidth frequency components are also seen, at higher frequencies, in the spectrum of figure 11. Only the first peak 64 is physically associated with the tonal acoustic response resulting from the fluid flow in the channel. The higher peaks are harmonics originating as artefacts of the due to the way in which the coherent Rayleigh noise speckle pattern detected by the sensor from the sensing optical fibre oscillates across more than half a wavelength of the speckle pattern at high acoustic intensities. That is, strong axial strain of the fibre resulting from environmental vibration perturbations result in a phase change in the measured local Rayleigh backscatter profile of greater than pi radians. A change of greater than pi radians in the phase of the local backscatter will result in a period doubling frequency characteristic in the measured relative change of intensity of the backscattered light, which is interpreted as being proportional to the relative change of the environmental vibrational intensity.

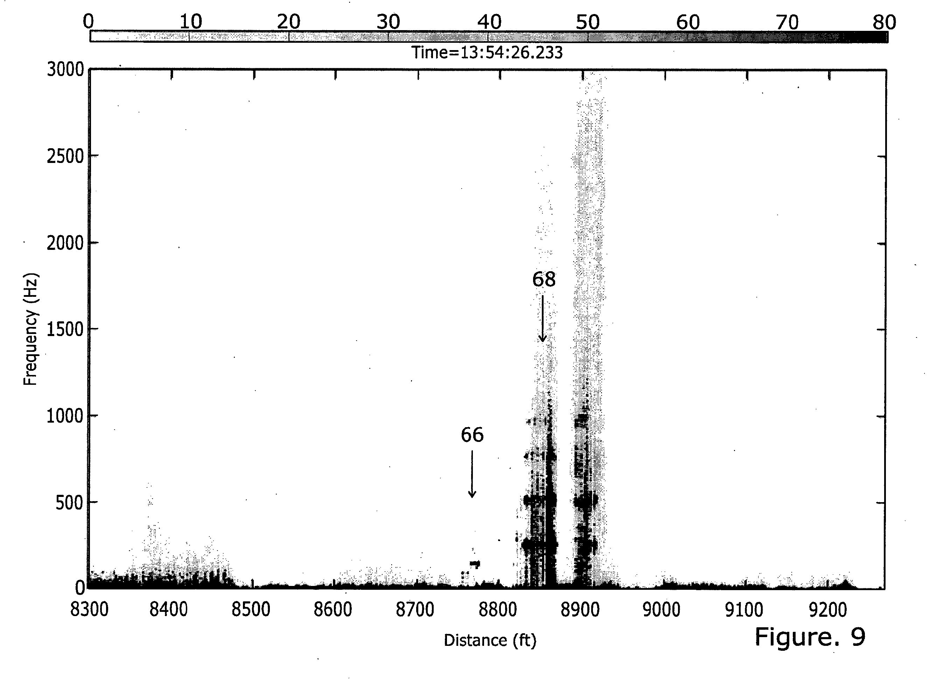

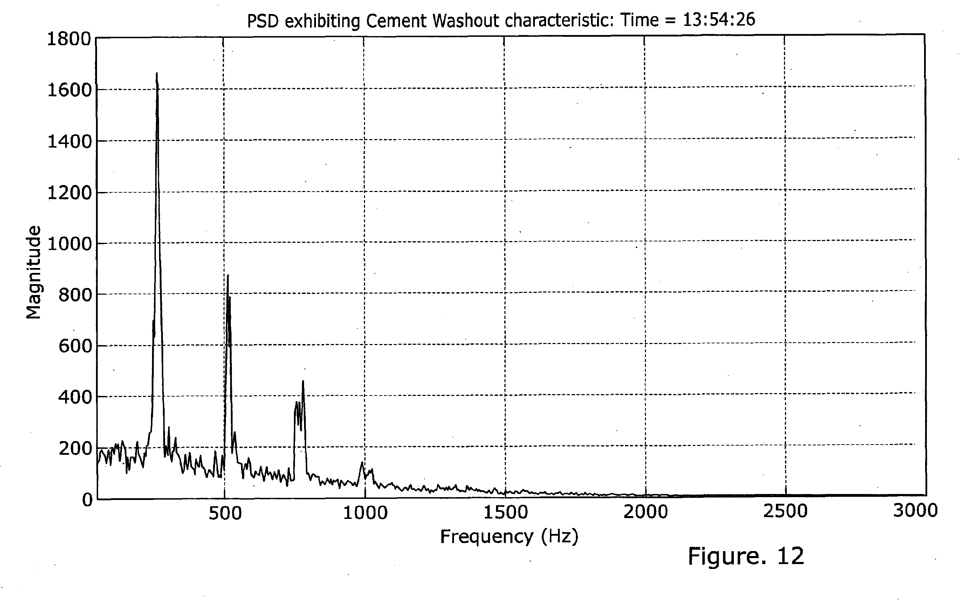

Such strong strains rarely exist in such a sensing environment and are thus not deemed to be of concern. However, in the case of excessive cement channelling (resulting from cement washout) a strong acoustic tonal feature evolves as the acoustic frequency peak discussed above. It is likely that, as the cement is eroded, the resulting channel (and thus the acoustic response) encroaches on the deployed circumferential location of the sensing fibre, which may be attached to the outer extreme of the cemented casing. In such a situation the detected response may initially (for a brief period) exhibit a single frequency band response, such as that shown as feature 66 in figure 9, but within a short period the response evolves to one exhibiting multiple narrowband components, of the form of feature 62 in figure 8 and as shown in figure 11. As the channel continues to encroach on the deployed fibre location the resultant vibrational state of the fibre intensifies which subsequently results in the generation of additional harmonics in the spectral response of the measured relative change of intensity of the backscattered light, as seen with feature 68 of figure 9 and in the corresponding acoustic frequency spectrum of figure 12 where as many as seven harmonics seem to be present.

Thus, detrimental cement washout can be detected in the measured backscattered light from a plurality of signals exhibiting a complex narrowband spectral form of that shown as feature 62 of figure 8 and in figure 11. As the washout continues and channels propagate the resultant sensing optical fibre perturbation intensifies evolving to exhibit a greater number of narrowband harmonic components, as shown in the spectral evolution evident from comparison of figures 8 and 9 or figures 11 and 12.

As the cement washout propagates either up- or downstream of an originating location, such as a deliberate or accidental egress point through the casing, the aforementioned (evolutionary) spectral characteristic can be tracked in space and time to identify the associated movement, extent, and instantaneous position of the propagating front. For example, figure 9 is similar to figure 8 but also shows an acoustic signature 66 of a fracture fluid formed channel in the casing cement which has propagated upstream of its originating location. Continued monitoring of said signals may determine whether the washout packs off or continues to allow fluid to pass along the resultant void and either enters the formation at an alternate location, or passes back within the casing at another casing orifice location.

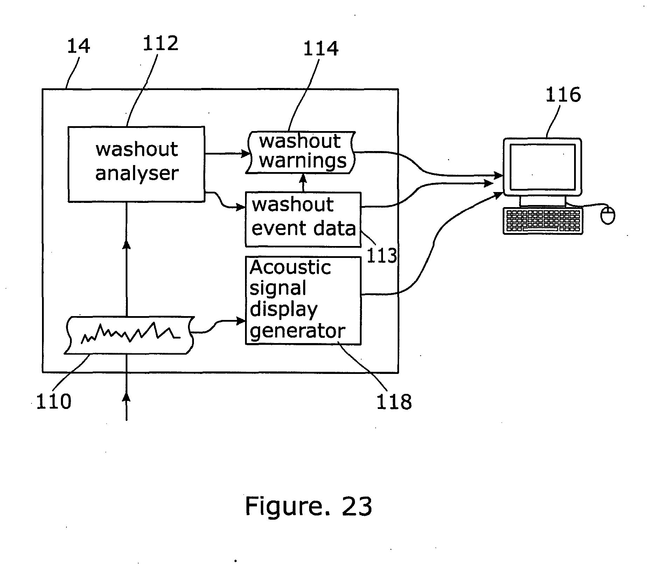

Apparatus which may be used to implement the above methods of detecting and tracking cement washout is illustrated schematically in figure 23, which shows some optional details of analyser 14 which is already shown in figure 1. In particular, the analyser 14 of figure 23 receives an acoustic signal 110 from the interrogator 1, the acoustic signal 110 representing the acoustic signal detected at the sensor optical fibre 4 over part or all of the length of the wellbore, and over time (for example in real time or near real time).

The analyser 14 contains a washout analyser 112 which receives the acoustic signal 110 and is arranged to detect an acoustic signature of washout of cement as discussed above. For example, the washout analyser 112 may detect one or more branches of an acoustic signature at the time of operation of a valve, and determine that these branches are likely to represent washout of cement. This determination may be made, for example, by detecting the spatial propagation and/or extent of such branches, and the intensity of the branch signal. The acoustic signature of washout may also or instead be detected by detecting a narrow acoustic frequency band or peak in the acoustic signal proximal to an egress point, for example, after operation of a valve, and/or the spatial propagation or development of such a frequency peak in a direction away from the egress point over time.

Based on the detected acoustic signature of washout, the washout analyser 112 may generate washout event data 113 relating to or describing a cement washout event that has been detected. Such data could, for example, represent one or more of the spatial location, time, spatial extent, duration, and intensity of the cement washout event, and a measure of certainty or accuracy of such data. Based on the detected acoustic signature of washout, and/or the cement washout event data, the washout analyser 112 may be used to issue one or more washout warnings 114 indicating a detection of washout, for display on a visual display unit 116. These warnings could be placed within, alongside or associated with a display of some or all of the acoustic signal, as generated by an acoustic data display generator 118. Other aspects of a washout event, for example as represented by the washout event data may also be displayed on the visual display unit 116.

The washout analyser may typically be implemented in software within a computer system which also implements other aspects of the analyser 14, this computer system being provided with data storage, data processor, input and output aspects in conventional ways.

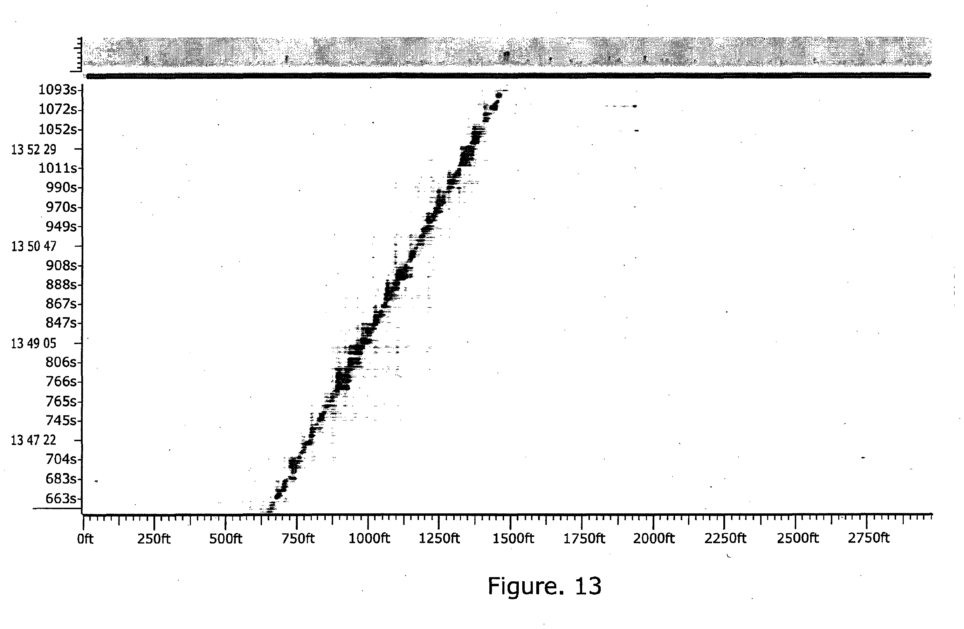

According to another aspect the invention provides a method of real-time distributed monitoring of the movement of a given hydraulic fracture ball (associated with a sliding sleeve fracturing process) along a wellbore comprising: using a distributed fibre optical sensor extending along the wellbore to detect signals arising from the movement of the fracture ball along the wellbore; identifying one or more features in said signals; measuring movement along the wellbore of said features; and monitoring said movement of the fracture ball using said measured movement. An example an acoustic signal detected at a sensing fibre indicative of a given hydraulic fracture ball (or equivalent valve drive component) moving along a wellbore is shown in figure 13, which plots the magnitude of the acoustic signal in greyscale as a function of depth and time. The signal may be indicative of mechanical vibration of casing structure arising from localised perturbations as a result of pressure front as the ball passes through the wellbore fluid, or other dynamics. The acoustic signal can be automatically detected, or identified manually, and the track of the valve drive component (for example position at particular times, velocity, etc.) can be derived. Monitoring said movement of the fracture ball may therefore comprise determining a velocity of said movement of the fracture ball at a plurality locations along said wellbore. The velocity or track may be analysed and compared against an expected range of velocities of the valve drive component. The track may also be used to establish an expected time at which the valve drive component will interact with a fixed entity within the wellbore, such as a sliding sleeve valve, and/or to determine if the track of the component does not proceed in the expected manner for example due to jamming, and this information may be used in generating alerts, warnings or other information for a user.

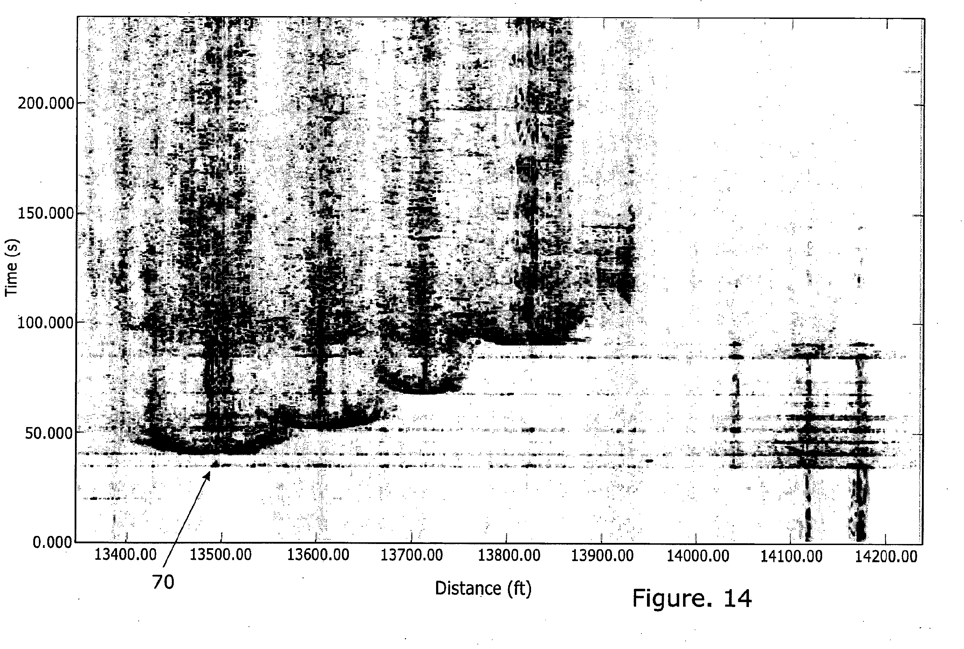

Another aspect of this invention provides a method for the monitoring and detection of correct sliding sleeve valve operation at a particular cluster, irrespective of valve type. Ball movement can be tracked to the wellbore location of a particular sliding sleeve valve for a given cluster as already discussed above and as shown in figure 13. Figure 14 plots the magnitude of the acoustic signal in greyscale as a function of depth along the wellbore and time, and the main "dish" shaped features represent the sequential opening of four sliding sleeve valves, with lateral branches at each opening showing excessive cement washout in each case as already discussed in connection with figure 7, and the central branch of the "W" in each case representing the ongoing fracture fluid egress and fracturing activity in the vicinity of the egress.

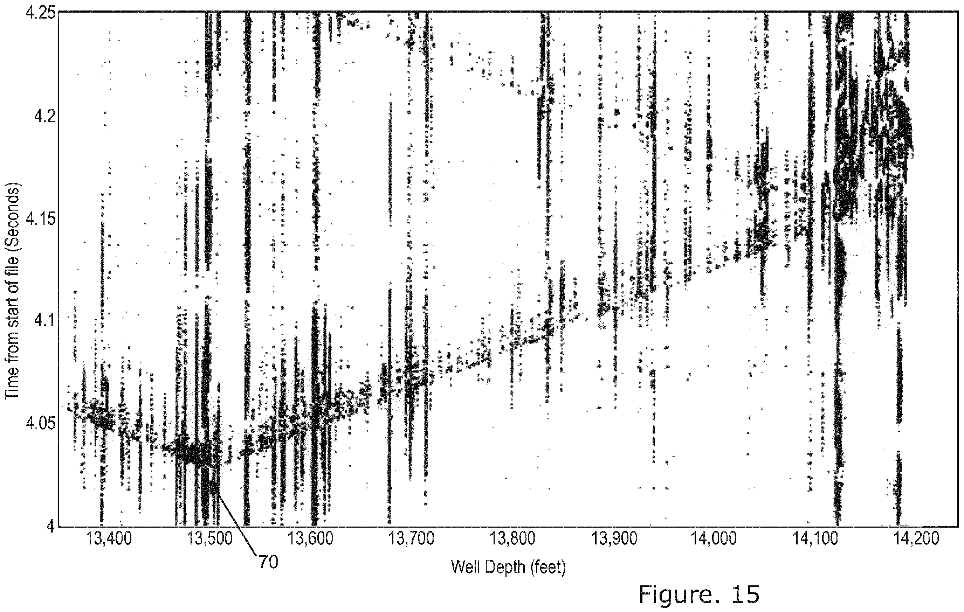

In figure 14 an event labelled as 70 corresponds to the impact of a drive ball on the seat of a sliding sleeve valve (which opens a few seconds later to release fracture fluid). The same event 70 is shown in figure 15 with the time axis greatly expanded to show only a quarter of a second in total. From figure 15 it can be seen that when the ball seats in said valve an impulsive pressure wave will propagate through the wellbore fluid, upstream and downstream, initially without bias. The invention therefore involves identifying one or more features in a plurality of detected signals across a large spatial extent of the wellbore; measuring movement along the wellbore of said features, monitoring said movement, and determining the velocity of said movement for detection of correct ball seating.

As the ball seats and the resulting pressure wave propagates up and downstream through the wellbore fluid, a negative gradient wave front results for the upstream propagating wave, and a positive gradient wave front results for the downstream propagating wave. The intersect point of the positive and negative gradient wave fronts correlating to the fibre position (i.e. well depth) at which the wave propagation originated, and thus the wellbore depth at which the ball seated in the valve, is shown as event 70 in figures 14 and 15.

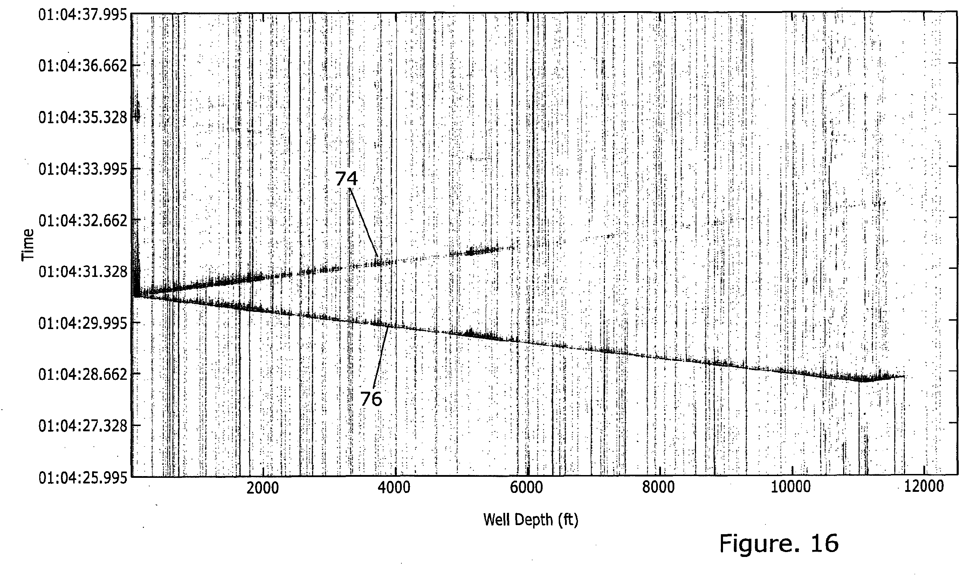

Correct seating of the drive ball may be determined, optionally using an automatic process, from: (i) calculation of the associated wave propagation velocity, and validation of correct correlation to expected acoustic velocities for applicable fluids, temperatures and pressures (for example oil-based water at 80 degrees Celsius); (ii) detection of the upstream propagating wave travelling the full extent of the wellbore, a characteristic that is only noted to exist as a result of large magnitude impulsive events such as ball seating or perforation creation; and (iii) determining that the fibre position (wellbore depth) of the intersection of the positive and negative gradient wave fronts intersect at a location correlating to the known valve position. Figure 16 illustrates aspect (ii) above in which a wave front 74 can be seen to travel about 3353 metres (11000 feet) all the way to the top of a wellbore in about 1.5 seconds, and even to then reflect back down the wellbore for a similar distance as wave front 76.

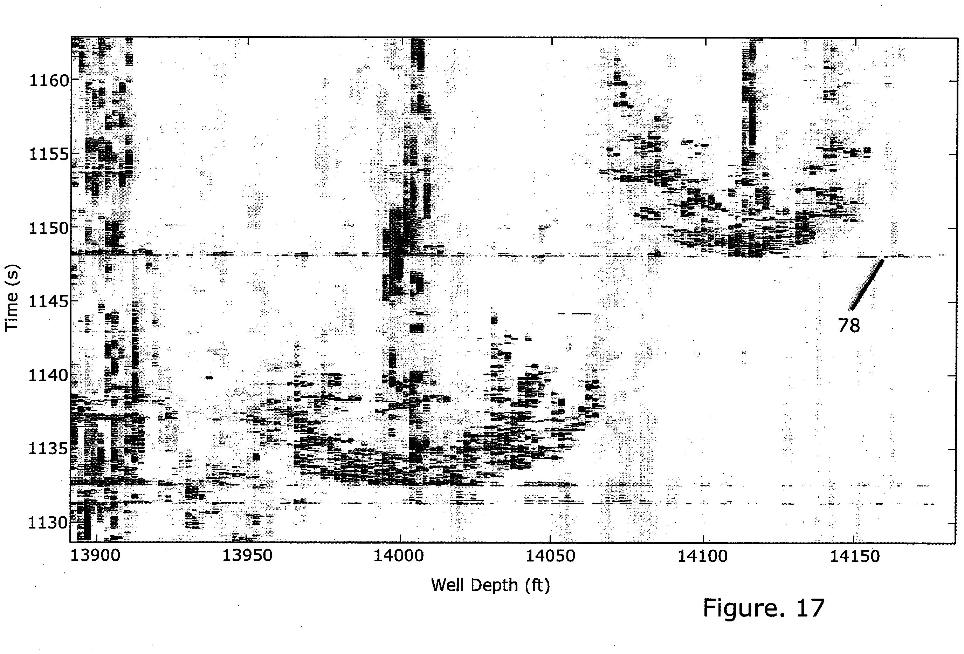

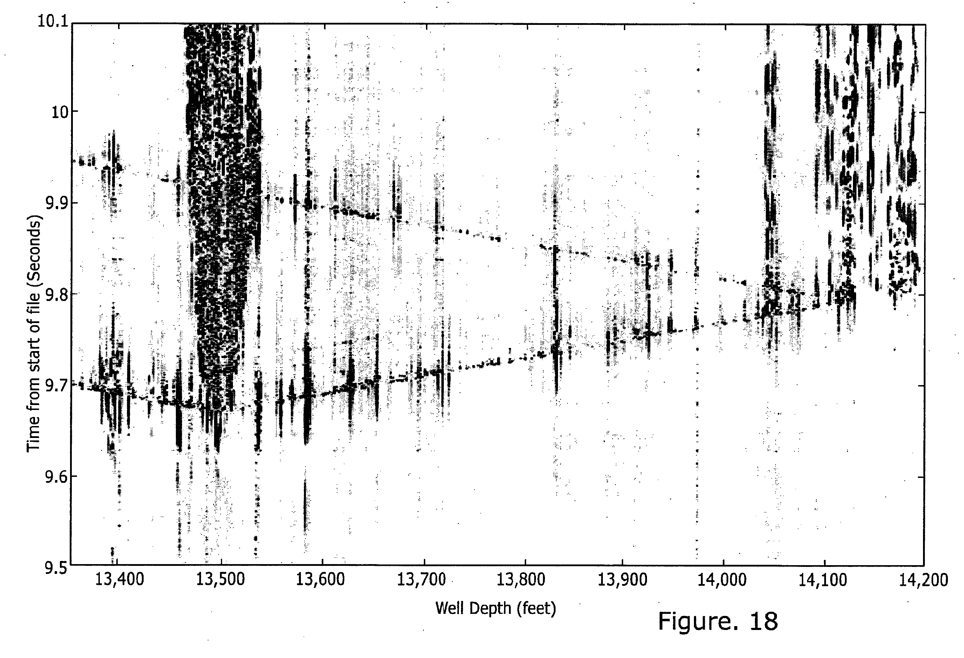

If the valve operates correctly, fracture of the local formation may be detected almost instantaneously after the ball has seated, as demonstrated by the detection of the propagating wave front triggered by the ball seating as discussed above. This sequence of events is illustrated in figure 17, in which the feature 78 extending across the full width of the graph can be seen at a point of fracture initiation. A similar event is shown in expanded time scale in figure 18 with a pressure wave 80 related to ball seating in the opening valve moving rapidly at about 1524 metres (5000 feet) per second in both upward and downward directions from the valve seat event.

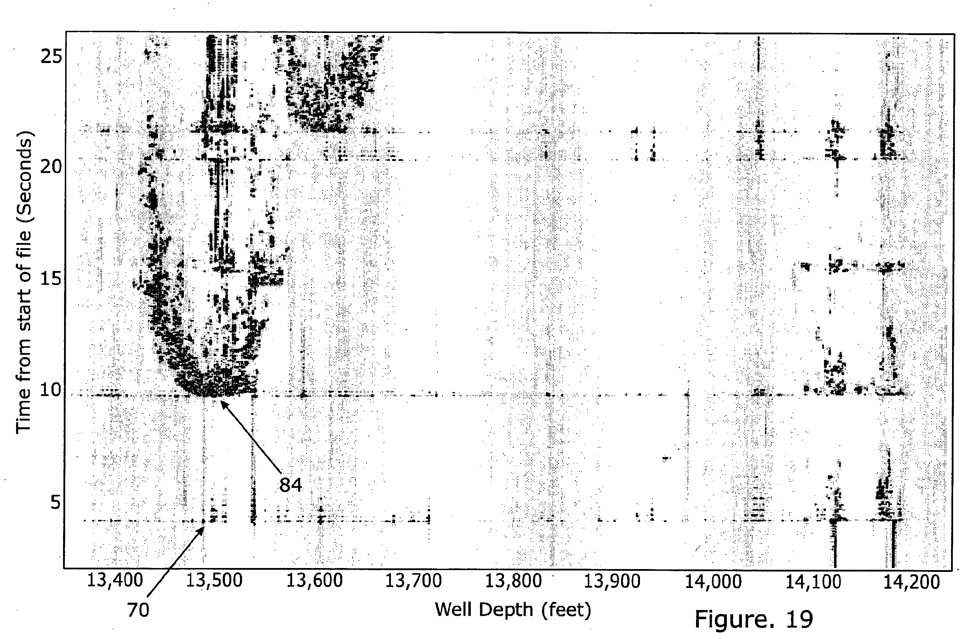

If a valve has become fouled with cement during the wellbore completion it may become stuck in one position. In such situations it is not uncommon for the valve to fail to open correctly. In this instance successful fracturing would not subsequently be detected. Rather no features particular to the dynamics of the fracturing process would be apparent in the detected signals. If at some later time the valve becomes free of the cement fouling a secondary pressure wave will result, and its upstream and downstream propagation would be detected, as a result of the sliding sleeve valve moving and subsequently coming to an abrupt stop against the associated valve stop. As with correct valve operation fracture of the local formation will be detected almost instantaneously after the valve has reached its stop and the fracture fluid egress port has opened. This process of delayed valve opening is illustrated in figure 19. This figure plots the data of figure 15, but on an extended timescale over about twenty seconds, so that the ball seating event 70 and the associated propagating wave front already discussed in connection with figure 15 is seen as a horizontal stripe in figure 19. The subsequent opening of the fouled or stuck valve then takes place at the event labelled 84, and is again associated with a pressure wave feature which propagates both up and down the wellbore, appearing as a further horizontal stripe intersecting with feature 84 in figure 19.

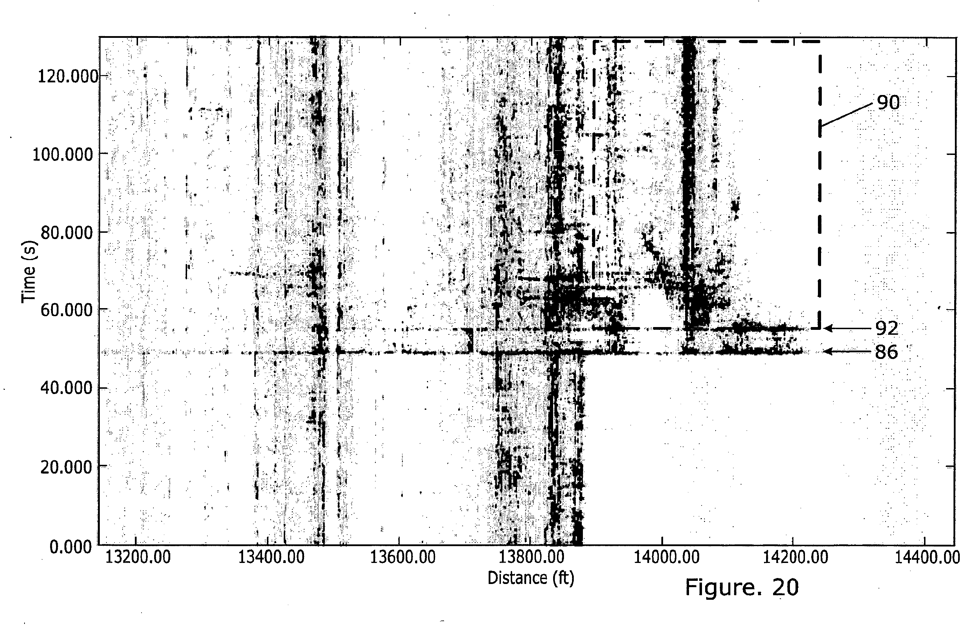

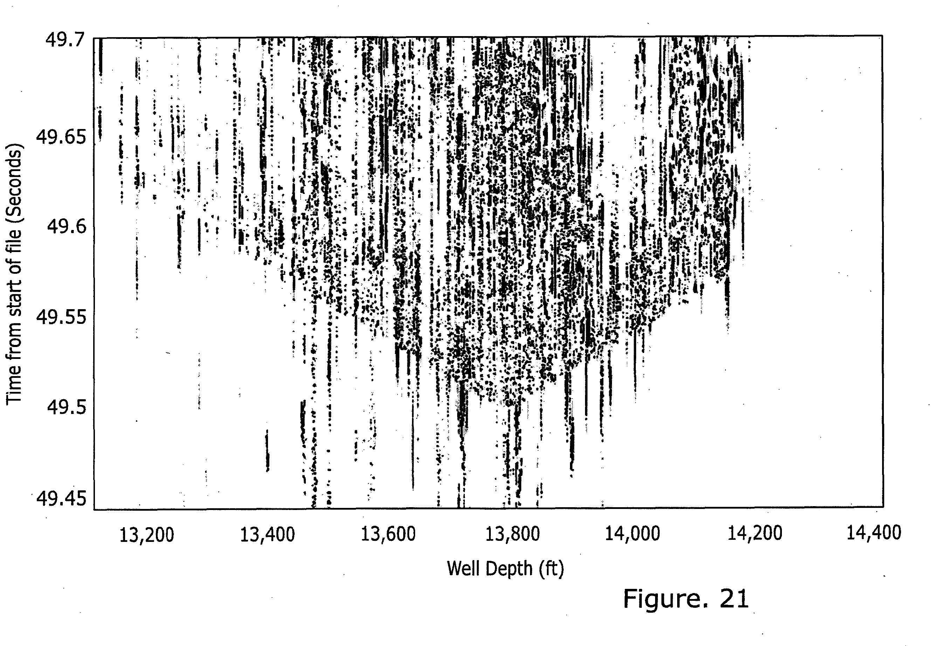

Another aspect of the invention provides a method for the monitoring and detection of sliding sleeve ball failure, for example as illustrated in figure 20. Such a phenomenon will typically occur at some time after successful fracturing of a zone has initiated. In such an instance the distributed acoustic sensor will already be monitoring and detecting the successful fracturing operation. At the instance the ball fails, either through ball disintegration or ball extrusion, an impulsive pressure wave will propagate through the wellbore fluid, upstream and downstream, initially without bias. Such a pressure wave is seen in figure 20 as the horizontal stripe labelled 86, which is expanded in the time direction to show just a quarter of a second of this event in figure 21.

As with successful valve operation, the invention may therefore provide for identifying one or more features in a plurality of detected signals across a spatial extent of the wellbore; measuring movement along the wellbore of said features, and monitoring said movement for initial detection of ball failure. Moreover, ball failure will be confirmed when additionally successful fracturing of clusters in the downstream neighbouring fracture zone, or any other zones further downstream, is subsequently detected. This effect is illustrated in figure 20 by the unplanned activation of a further valve, downstream from the valve where ball failure took place. The acoustic signature of this unplanned activation is shown within the box labelled 90.

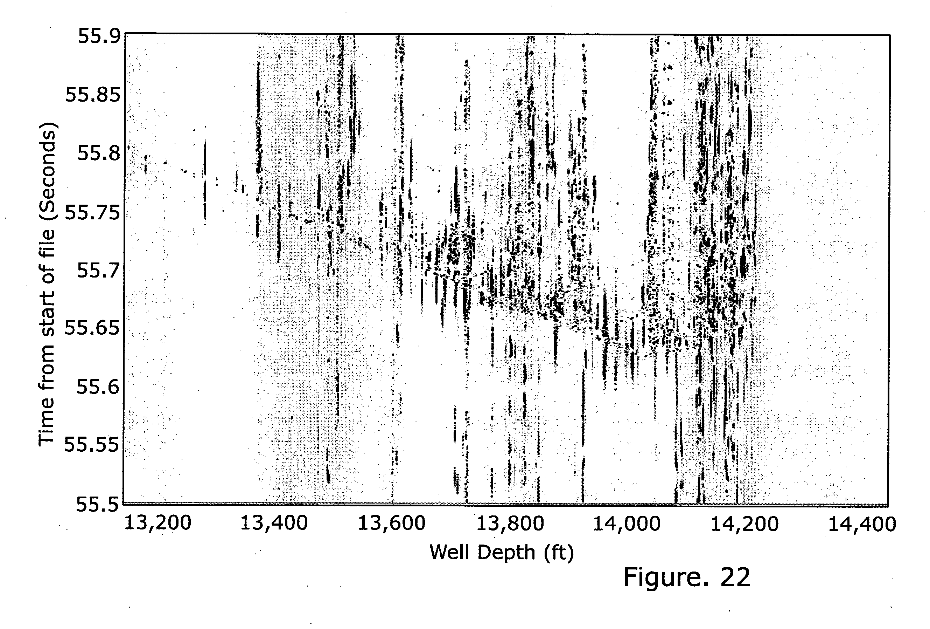

The detected failure mode is said to be one of ball disintegration if successful fracturing of one or more clusters in any given downstream fracture zone is detected almost instantly after the propagating pressure wave associated with the initial ball failure is detected. The mode of failure is said to be one of ball extrusion if a second propagating pressure wave is detected at some time after the initially detected propagating pressure wave, and successful fracturing of one or more clusters in any given downstream fracture zone is detected almost instantly after the second propagating pressure wave is detected. From figure 20 it can be seen that a second propagating pressure wave occurs at the start of the signature of fracture fluid activity of box 90 at the downstream valve, so that in this case the mode of failure is one of ball extrusion. The second propagating pressure wave is shown in expanded time frame detail in figure 22.

Assurance can be provided by monitoring both the time differential between detection of the first (see figure 21) and second (see figure 22) propagating pressure waves and the spatial differential between the loci of the detected origins of the first and second propagating pressure waves.

With all of the aforementioned methods reliant on the detection of propagating pressure waves, waves propagating upstream in the wellbore fluid will have a negative gradient, waves propagating downstream will have a positive gradient. The intersection locus for the positive and negative gradients will identify the originating wellbore location for the associated pressure wave.

The invention also provides apparatus arranged to implement the above methods, for example apparatus for monitoring hydraulic fracturing dynamics within the wellbore comprising: a sensing optical fibre disposed along the length and path of the wellbore; an optical interrogator arranged to launch probe light pulses into said sensing optical fibre and to determine properties of said probe light backscattered within the sensing optical fibre, said properties being indicative of mechanical vibration at said sensing optical fibre; and an analyser arranged to automatically analyse said properties to detect one or more vibration features associated with the aforementioned fracture dynamics. The sensing optical fibre may be installed within, on the outside, or in a wall of the wellbore casing.

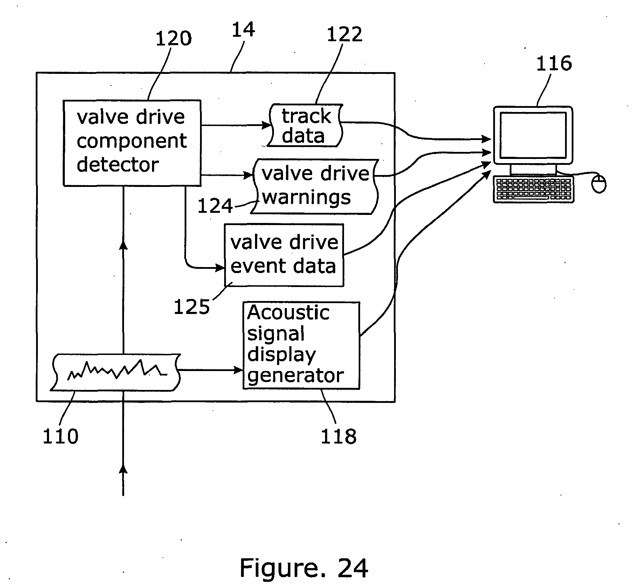

Apparatus which may be used to implement the above methods of detecting and monitoring a valve drive component and the effects of its movement and behaviour is illustrated schematically in figure 24, which shows some optional details of analyser 14 which is already shown in figure 1. In particular, the analyser 14 of figure 24 receives an acoustic signal 110 from the interrogator 1, the acoustic signal 110 representing the acoustic signal detected at the sensor optical fibre 4 over part or all of the length of the wellbore, and over time (for example in real time or near real time).

The analyser 14 contains a valve drive component detector 120 which receives the acoustic signal 110 and is arranged to recognise, identify or detect an acoustic signature relating to the valve drive component as discussed above. For example, the valve drive component detector 120 may identify from the acoustic signal 110 a position or track of the valve drive component, an impact of the valve drive component at a valve for example onto a valve seat, failure of a valve to open after such an impact (for example by recognising an absence of an expected further acoustic signature of fracture fluid entering the formation), subsequent opening of a valve, failure of a valve drive component by extrusion or disintegration, and so forth,. The valve drive component detector may detect wave fronts which are rapidly propagating along the wellbore and determine an origin of such wave fronts to identify in space and/or time an origin of the wave fronts which was an event involving the valve drive component.

The valve drive component detector 120 may output one or more groups of data, such as: track data of a valve drive component 122 representing a location of the valve drive component at multiple times or a range of times; one or more warnings or event indicators 124 indicating events such as valve impact, opening, failure etc.; and valve drive event data 125 which could represent, for example, time and/or location of a valve drive component seating in a valve, failing by extrusion or disintegration, and other aspects as discussed above. One or more such items or groups of data may be displayed on a visual display unit 116. These data items could be placed within, alongside or associated with a display of some or all of the acoustic signal, as generated by an acoustic data display generator 118.

The valve drive component detector 120 may typically be implemented in software within a computer system which also implements other aspects of the analyser 14, this computer system being provided with data storage, processor, input and output aspects in conventional ways.

Various modifications may be made to the described embodiments without departing from the scope of the invention. For example, the sensing optical fibre disposed along the wellbore may be arranged in various ways including being comprised within a cable of various types, such a cable being fixed to the casing or unfixed, and such a cable or fibre being internal to, external from, or integrated within the casing. The invention may be implemented using one, two or more such sensing optical fibres, for example with multiple sensing optical fibres being provided for the purposes of redundancy, improvement of signal, coverage of well branches and so forth. Similarly, although the invention may be implemented using a distributed acoustic optical fibre sensor using coherent Rayleigh scattering and the detection of speckle pattern changes in a coherent Rayleigh noise speckle pattern, other techniques may be used to detect the acoustic signatures described herein.

Figure 1 shows analyser 14 connected to interrogator 1, but it should be noted that such an analyser for identifying the described acoustic signatures may be integrated with, collocated with, adjacent to, spaced from, or distant from the interrogator, and the two may or may not be connected using a network connection, depending on requirements. The analysis to identify the acoustic signatures and generate relevant event data, warnings and the like may take place in real time, or substantially in real time as the acoustic signal is detected, or at another time for example continuously with a time delay, or off-line or at a different time altogether for example by analysis of acoustic signal data which has been previously acquired and is being used for subsequent analysis of a previous hydraulic fracturing operation which may already have been completed.

The techniques, methods and apparatus may also be used for situations which are not part of a hydraulic fracturing operation, for example to detect cement washout, down well component failure and/or other problems in a well bore in other circumstances and during different kinds of operations.

## Claims

1. A method of automatically monitoring a hydraulic fracturing operation using a distributed optical fibre sensor (1,4,14), comprising:
using the distributed optical fibre sensor to detect an acoustic signal (110) from the wellbore, **characterised in that** the method further comprises:
carrying out automatic recognition, from the acoustic signal (110), of an acoustic signature of washout of cement surrounding a casing (5) of the wellbore, the automatic recognition comprising analysing the acoustic signal to identify a central region (52) of the acoustic signature which is proximal to an egress point in the casing (5), and to identify one or more branch regions of the acoustic signature and their movement away from the egress point over time in association with related cement washout activity progressing along the wellbore.

2. The method of claim 1 further comprising detecting a spatial extent of said washout from a spatial distribution of said recognized acoustic signature.

3. The method of claim 1 or 2 wherein recognizing the acoustic signature comprises identifying two said branch regions which simultaneously move away from the egress point in opposite directions along the wellbore.

4. The method of claim 1, 2 or 3 comprising recognizing the central region (52) and the one or more branch regions initiating together at a time of opening of a valve to permit fracture fluid to pass through an egress point in the casing.

5. The method of claim 4 further comprising identifying from the acoustic signal a pressure wave front (50) propagating rapidly in both directions along the wellbore, and associating the origin of the wave front with the opening of the valve.

6. The method of any preceding claim further comprising measuring a spatial extent of said washout from spatial extent of the one or more branch regions.

7. The method of any preceding claim wherein recognizing the acoustic signature comprises identifying an acoustic frequency peak (64) in the acoustic signal (110) detected by the distributed optical fibre sensor.

8. The method of claim 7 comprising recognising the acoustic frequency peak (64) as located in a said branch region of the acoustic signature.

9. The method of claim 7 or 8 wherein the acoustic frequency peak (64) has a height of at least double the associated background acoustic signal.

10. The method of any of claims 7 to 9 wherein the acoustic frequency peak (64) has a full width at half maximum (FWHM) of less than 100 Hz.

11. The method of any of claims 7 to 10 wherein the apex of the acoustic frequency peak (64) lies between 40 Hz and 300 Hz.

12. The method of any of claims 7 to 11 comprising determining extent of the cement washout by determining a spatial position of the acoustic frequency peak (64).

13. The method of any of claims 7 to 12 comprising determining packoff of cement washout by determining diminishment of the acoustic frequency peak (64).

14. The method of any preceding claim further comprising automatically generating an alarm signal or an alert when an acoustic signature of cement washout is identified.

15. Apparatus for monitoring a hydraulic fracturing operation comprising:
a distributed optical fibre sensor (1,4,14) comprising a sensor optical fibre (4) disposed along a wellbore; and
a washout detector (112) arranged to receive an acoustic signal (110) from the distributed optical fibre sensor, and to automatically carry out recognition, from the acoustic signal, of an acoustic signature of washout of cement surrounding a casing (5) of the wellbore, by carrying out the steps of any preceding claim.

## Patentansprüche

1. Verfahren zum automatischen Überwachen eines hydraulischen Aufbruch-Betriebs unter Verwendung eines verteilten Lichtleiter-Sensors (1, 4, 14), umfassend:
Verwenden des verteilten Lichtleiter-Sensors, um ein akustisches Signal (110) von dem Bohrloch zu detektieren, **dadurch gekennzeichnet, dass** das Verfahren ferner umfasst:
Ausführen einer automatischen Erkennung von dem akustischen Signal (110) einer akustischen Signatur eines Auswaschens von Zement, welcher ein Gehäuse (5) des Bohrlochs umgibt, wobei das automatische Erkennen ein Analysieren des akustischen Signals umfasst, um einen zentralen Bereich (52) der akustischen Signatur zu identifizieren, welcher einem Ausgang-Punkt in dem Gehäuse (5) proximal ist, und um einen oder mehrere Abzweigung-Bereiche der akustischen Signatur und ihre Bewegung von dem Ausgang-Punkt weg über eine Zeit in Zuordnung zu einer entsprechenden Zement-Auswaschung-Aktivität zu identifizieren, welche sich entlang des Bohrlochs ausbreitet.

2. Verfahren nach Anspruch 1, ferner umfassend ein Detektieren einer räumlichen Ausdehnung der Auswaschung von einer räumlichen Verteilung der erkannten akustischen Signatur.

3. Verfahren nach Anspruch 1 oder 2, wobei ein Erkennen der akustischen Signatur ein Identifizieren zwei der Abzweigung-Bereiche umfasst, welche sich gleichzeitig von dem Ausgang-Punkt in entgegengesetzte Richtungen entlang des Bohrlochs bewegen.

4. Verfahren nach Anspruch 1, 2 oder 3, umfassend ein Erkennen des zentralen Bereichs (52) und des einen oder der mehreren Abzweigung-Bereiche, zusammen zu einer Zeit einer Öffnung eines Ventils initiierend, um einem Ausbruch-Fluid zu erlauben, durch einen Ausgang-Punkt in dem Gehäuse hindurch zu treten.

5. Verfahren nach Anspruch 4, ferner umfassend ein Identifizieren von dem akustischen Signal einer Druckwellen-Front (50), welche sich in beide Richtungen entlang des Bohrlochs schnell ausbreitet, und ein Zuordnen des Ursprungs der Wellen-Front zu der Öffnung des Ventils.

6. Verfahren nach einem vorhergehenden Anspruch, ferner umfassend ein Messen einer räumlichen Ausdehnung der Auswaschung von einer räumlichen Ausdehnung des einen oder der mehreren Abzweigung-Bereiche.

7. Verfahren nach einem vorhergehenden Anspruch, wobei ein Erkennen der akustischen Signatur ein Identifizieren einer akustischen Frequenz-Spitze (64) in dem akustischen Signal (110) umfasst, welches durch den verteilten Lichtleiter-Sensor detektiert wird.

8. Verfahren nach Anspruch 7, umfassend ein Erkennen der akustischen Frequenz-Spitze (64), wie in dem Abzweigung-Bereich der akustischen Signatur angeordnet.

9. Verfahren nach Anspruch 7 oder 8, wobei die akustische Frequenz-Spitze (64) eine Höhe von wenigstens dem Doppelten des zugeordneten akustischen Hintergrund-Signals aufweist.

10. Verfahren nach einem der Ansprüche 7 bis 9, wobei die akustische Frequenz-Spitze (64) eine vollständige Breite bei einem halben Maximum (FWHM) von weniger als 100 Hz aufweist.

11. Verfahren nach einem der Ansprüche 7 bis 10, wobei der Scheitel der akustischen Frequenz-Spitze (64) zischen 40 Hz und 300 Hz liegt.

12. Verfahren nach einem der Ansprüche 7 bis 11, umfassend ein Bestimmen einer Ausdehnung der Zement-Auswaschung durch Bestimmen einer räumlichen Position der akustischen Frequenz-Spitze (64).

13. Verfahren nach einem der Ansprüche 7 bis 12, umfassend ein Bestimmen eines Packoff einer Zement-Auswaschung durch Bestimmen einer Abnahme der akustischen Frequenz-Spitze (64).

14. Verfahren nach einem vorhergehenden Anspruch, ferner umfassend ein automatisches Erzeugen eines Alarm-Signals oder einer Warnung, wenn eine akustische Signatur einer Zement-Auswaschung identifiziert wird.

15. Vorrichtung zum Überwachen eines hydraulischen Aufbruch-Betriebs, umfassend:
einen verteilten Lichtleiter-Sensor (1, 4, 14), umfassend einen Sensor-Lichtleiter (4), welcher entlang eines Bohrlochs angeordnet ist; und
einen Auswaschung-Detektor (112), welcher dazu eingerichtet ist, ein akustisches Signal (110) von dem verteilten Lichtleiter-Sensor zu empfangen und automatisch eine Erkennung von dem akustischen Signal einer akustischen Signatur eines Auswaschens von Zement, welcher ein Gehäuse (5) des Bohrlochs umgibt, durch Ausführen der Schritte nach einem vorhergehenden Anspruch auszuführen.

## Revendications

1. Procédé de surveillance automatique d'une opération de fracturation hydraulique en utilisant un capteur à fibre optique distribuée (1, 4, 14), comprenant l'étape consistant à :
utiliser le capteur à fibre optique distribuée pour détecter un signal acoustique (110) à partir du puits de forage, le procédé étant **caractérisé en ce qu'**il comprend en outre l'étape consistant à :
effectuer une reconnaissance automatique, à partir du signal acoustique (110), d'une signature acoustique de lessivage de ciment entourant un tubage (5) du puits de forage, la reconnaissance automatique comprenant l'analyse du signal acoustique pour identifier une région centrale (52) de la signature acoustique qui est proximale à un point de sortie dans le tubage (5), et pour identifier une ou plusieurs régions de branche de la signature acoustique et leurs éloignements du point de sortie au fil du temps en association avec une activité de lessivage de ciment connexe progressant le long du puits de forage.

2. Procédé de la revendication 1, comprenant en outre l'étape consistant à détecter une étendue spatiale dudit lessivage à partir d'une distribution spatiale de ladite signature acoustique reconnue.

3. Procédé de la revendication 1 ou 2, dans lequel la reconnaissance de la signature acoustique comprend l'identification de deux desdites régions de branche qui s'éloignent simultanément du point de sortie dans des directions opposées le long du puits de forage.

4. Procédé de la revendication 1, 2 ou 3, comprenant l'étape consistant à reconnaître la région centrale (52) et les une ou plusieurs régions de branche démarrant ensemble au moment de l'ouverture d'une soupape pour permettre à un fluide de fracturation de passer par un point de sortie dans le tubage.

5. Procédé de la revendication 4, comprenant en outre les étapes consistant à identifier à partir du signal acoustique un front d'onde de pression (50) se propageant rapidement dans les deux directions le long du puits de forage, et à associer l'origine du front d'onde à l'ouverture de la soupape.

6. Procédé de l'une des revendications précédentes, comprenant en outre l'étape consistant à mesurer une étendue spatiale dudit lessivage à partir de l'étendue spatiale des une ou plusieurs régions de branche.

7. Procédé de l'une des revendications précédentes, dans lequel la reconnaissance de la signature acoustique comprend l'identification d'un pic de fréquence acoustique (64) dans le signal acoustique (110) détecté par le capteur à fibre optique distribuée.

8. Procédé de la revendication 7, comprenant l'étape consistant à reconnaître le pic de fréquence acoustique (64) comme étant situé dans ladite région de branche de la signature acoustique.

9. Procédé de la revendication 7 ou 8, dans lequel le pic de fréquence acoustique (64) a une hauteur d'au moins le double du signal acoustique de fond associé.

10. Procédé de l'une des revendications 7 à 9, dans lequel le pic de fréquence acoustique (64) a une largeur totale à mi-hauteur (FWHM) inférieure à 100 Hz.

11. Procédé de l'une des revendications 7 à 10, dans lequel le sommet du pic de fréquence acoustique (64) est compris entre 40 Hz et 300 Hz.

12. Procédé de l'une des revendications 7 à 11, comprenant l'étape consistant à déterminer l'étendue du lessivage de ciment en déterminant une position spatiale du pic de fréquence acoustique (64).

13. Procédé de l'une des revendications 7 à 12, comprenant l'étape consistant à déterminer le tassement de lessivage de ciment en déterminant la diminution du pic de fréquence acoustique (64).

14. Procédé de l'une des revendications précédentes, comprenant en outre l'étape consistant à générer automatiquement un signal d'alarme ou une alerte lorsqu'une signature acoustique de lessivage de ciment est identifiée.

15. Appareil de surveillance d'une opération de fracturation hydraulique comprenant :
un capteur à fibre optique distribuée (1, 4, 14) comprenant une fibre optique de capteur (4) disposée le long d'un puits de forage ; et
un détecteur de lessivage (112) agencé pour recevoir un signal acoustique (110) à partir du capteur à fibre optique distribuée, et pour effectuer automatiquement la reconnaissance, à partir du signal acoustique, d'une signature acoustique de lessivage de ciment entourant un tubage (5) du puits de forage, en effectuant les étapes de l'une des revendications précédentes.
